(19) **Europäisches Patentamt / European Patent Office / Office européen des brevets**

(11) **EP 1 763 099 B1**

(12) **EUROPEAN PATENT SPECIFICATION**

(45) Date of publication and mention
of the grant of the patent:
**28.11.2018 Bulletin 2018/48**

(51) Int Cl.:
*H01M 6/16* (2006.01)     *H01B 1/12* (2006.01)
*H01M 10/0567* (2010.01)     *H01M 10/0568* (2010.01)

(21) Application number: **06017458.8**

(22) Date of filing: **22.08.2006**

(54) **Stable electrolyte counteranions for capacitors**

Stabile Elektrolyt-Gegenanionen für Kondensatoren

Contre-anions d'électrolyte stable pour des condensateurs

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **23.08.2005 US 710766 P
15.08.2006 US 504039 P**

(43) Date of publication of application:
**14.03.2007 Bulletin 2007/11**

(73) Proprietor: **AIR PRODUCTS AND CHEMICALS,
INC.
Allentown, PA 18195-1501 (US)**

(72) Inventors:
• **Pez, Guido Peter
Allentown
PA 18103 (US)**
• **Ivanov, Sergei Vladimirovich
Schnecksville
PA 18078 (US)**

• **Dantsin, Gennady
Allentown
PA 18104 (US)**
• **Casteel, William Jack
Emmaus
PA 18049 (US)**
• **Lehmann, John F.
Breinigsville
PA 18031 (US)**

(74) Representative: **Kador & Partner PartG mbB
Corneliusstraße 15
80469 München (DE)**

(56) References cited:
**EP-A- 1 513 215     EP-A1- 1 624 519
DE-A1- 2 944 026     FR-A- 2 523 770
US-A- 3 551 120     US-B1- 6 335 466**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

CROSS-REFERENCE TO RELATED APPLICATIONS

This application claims benefit of U.S. Provisional Application No. 60/710,766, filed August 23, 2005.

BACKGROUND OF THE INVENTION

Electrochemical cells are most generally defined as "two electrodes separated by at least one electrolyte phase." Similarly, electrodes are broadly defined as "phases through which charge is carried by the movement of electrons" while electrolytes are defined as" phases through which charge is carried by the movement of ions." Electrochemical cells are used in a host of applications including materials synthesis and electroplating. In these devices the electrolyte often is chosen as a reactant, which is converted through its oxidation or reduction into the material of interest. In other applications, where the electrochemical cell is not being used to synthesize or produce a material, the electrolyte is usually chosen for its ability to readily carry ionic charge, often for its ability to participate reversibly in chemistry occurring at the electrodes and importantly, for its stability at the cells' normal and extreme operating conditions. Examples of such devices include electrochemical sensors, electrochromic devices, in which electrode oxidation or reduction results in a color change useful for display applications, and devices for the storage or generation of energy. These last are the most important and most common.

A wide range of electrochemical cell-based devices are known for the storage and generation of energy in the form of electricity. These include cells in which electrochemical reactions occur, e.g., batteries and fuel cells, and cells which store energy via charge separation, e.g., capacitors.

A battery is an electrochemical cell comprised of an oxidizing positive electrode or cathode, and a reducing negative electrode or anode, separated by a porous separator and electrochemically connected via an ion conducting media or electrolyte to an external electron carrying circuit. All the available energy is stored within the cell which may be either primary - non-rechargeable, or secondary - rechargeable. For example, a lithium ion battery comprises positive and negative electrodes, which contain lithium at least during certain stages of the cells' charging or discharging modes. The conducting medium must be able to transport lithium ions in both directions between the cathode and anode. A magnesium battery comprises a magnesium containing anode. The conducting medium for a magnesium battery must be able to transport magnesium ions between the cathode and anode. Similarly, the conducting medium for calcium or aluminum batteries must be able to transport calcium and aluminum cations correspondingly. For example, a battery using magnesium as the negative electrode is expected to have a higher theoretical volume energy density than one using metallic Li, because two electrons transfer when 1 atom of magnesium reacts in the negative electrode. Since magnesium is abundant in natural resources, low-priced and environmentally friendly, it is highly desired as a negative electrode material.

The following patents are representative of lithium batteries and electrochemical cells:

US 4,201,839 discloses an electrochemical cell based upon alkali metal-containing anodes, solid cathodes, and electrolytes where the electrolytes are closoborane compounds carried in aprotic solvents. Closoboranes employed are of the formula $Z_2BnXn$ and $ZCRBmXm$ wherein Z is an alkali metal, C is carbon, R is a radical selected from the group consisting of organic hydrogen and halogen atoms, B is boron, X is one or more substituents from the group consisting of hydrogen and the halogens, m is an integer from 5 to 11, and n is an integer from 6-12. Specifically disclosed examples of closoborane electrolytes employed in the electrochemical cells include lithium bromooctaborate, lithium chlorodecaborate, lithium chlorododecaborate, and lithium iodododecaborate.

US 5,849,432 discloses electrolyte solvents for use in liquid or rubbery polymer electrolyte solutions based upon boron compounds with Lewis acid characteristics, e.g., boron linked to oxygen, halogen atoms, and sulfur. A specific example of an electrolyte solution comprises lithium perchlororate and boron ethylene carbonate.

US 6,346,351 discloses electrolyte systems for a secondary rechargeable battery of high compatibility towards positive electrode structures based upon a salt and solvent mixture. Lithium tetrafluoroborate and lithium hexafluorophosphate are examples of salts. Examples of solvents include diethyl carbonate, dimethoxyethane, methylformate, and so forth. In the background, are disclosed known electrolytes for lithium batteries, which include lithium perchlorate, lithium hexafluoroarsenate, lithium trifluoromethylsulfonate, lithium tetrafluoroborate, lithium bromide, and lithium hexafluoroantimonate electrolytes incorporated in solvents.

US 6,159,640 discloses electrolyte systems for lithium batteries used in electronic equipment such as mobile phones, laptop computers, camcorders, etc based upon fluorinated carbamates. A variety of fluorinated carbamate salts, e.g., trifluoroethyl-N, N-dimethylcarbamate is suggested.

US 6,537,697 discloses a lithium secondary battery using a nonaqueous electrolyte including lithium tetrakis(pentafluorophenyl)borate as an electrolyte salt.

US 6514,474 discloses the need for removing traces of water and acid from lithium hexafluorophosphate salt to be used in lithium battery applications and a purification process.

As represented above a wide variety of lithium-based electrolytes comprising a lithium salt for lithium batteries are disclosed and, although having use in many electronic applications, they are faced with problems associated with safety, oxidative stability, thermal stability, and so forth. Fluorinated electrolyte salts have had the additional problem that deleterious and toxic hydrogen fluoride, HF can be produced on compound breakdown. The following are some of the deficiencies associated with specific electrolyte salts: lithium hexafluorophosphate fails primarily on the basis that it is unstable, generating HF, which leads to electrode corrosion, particularly with $LiMn_2O_4$ cathode materials; lithium perchlorate has relatively low thermal stability leading to explosive mixtures above 100°C; lithium hexafluoroarsenate has a problem of arsenic toxicity; and lithium triflate electrolytes lead to significant corrosion of aluminum current collectors typically used in lithium ion batteries.

The following patents are representative of magnesium, calcium and aluminum batteries and electrochemical cells:

US 2003/0059684 A1 discloses the nonaqueous electrolyte battery comprising a positive electrode; a negative electrode containing at least one element selected from the group consisting of aluminum, calcium and magnesium; and a nonaqueous solution composed of a mixed organic solvent and an alkyl sulfone. The organic solvent is selected from the group consisting of aluminum salt, calcium salt and magnesium salt, such as $Al(BF_4)_3$, $Al(PF_6)_3$, $Al(ClO_4)_3$, $Al(CF_3SO_3)_3$, $Al((C_2F_5SO_2)_2N)_3$; $Ca(BF_4)_2$, $Ca(PF_6)_2$, $Ca(ClO_4)_2$, $Ca(CF_3SO_3)_2$, $Ca((C_2F_5SO_2)_2N)_2$; $Mg(BF_4)_2$, $Mg(PF_6)_2$, $Mg(ClO_4)_2$, $Mg(CF_3SO_3)_2$, $Mg((C_2F_5SO_2)_2N)_2$.

US Patent application US2004/0137324 A1 discloses an electrolyte for an nonaqueous battery comprising magnesium bistrifluoromethanesulfonimide, $Mg((CF_3SO_2)_2N)_2$, and an organic solvent such as a cyclic carbonate, a chain carbonate and cyclic ether.

Electrochimica Acta, 2002, p.1013-1022 describes a gel polymer electrolyte for magnesium batteries consisting of poly(methylmethacrylate) and magnesium triflate $Mg(CF_3SO_3)_2$.

A fuel cell is an electrochemical cell, much like a battery comprised of a hydrogen anode, or negative electrode, an oxygen cathode, or positive electrode and a proton conducting medium. Rather than being rechargeable with a source of electricity, fuel and oxidizer, typically hydrogen and oxygen are fed into the cell externally.

The following patents and articles are representative of the state of the art with respect to proton conducting membranes for use in fuel cells and electrochemical devices.

US 6,468,684, discloses solid acid electrolytes of general formula $M_aH_b(XO_t)_c$ where H is a proton, M is a metal such as Li, Be, Na, and Mg, X is Si, P, S, As and a, b, c, and t are rational numbers, for use as proton conducting materials. These electrolytes do not require- hydration and can be operated at temperatures above 100°C. Composite membranes fabricated from the solid acid, $CsHSO_4$, a representative of this class show conductivities as high as 8 mS $cm^{-1}$ at 146°C in humidified air ($p_{H2O}$ = 3.13 x $10^{-2}$ atm). However, it has been reported that these materials can be reduced in the presence of hydrogen at elevated temperatures and would thus suffer from a gradual degradation under fuel cell operation conditions.

US 5,344,722 discloses a phosphoric acid fuel cell in which the electrolyte includes phosphoric acid and a fluorinated compound, such as a salt of nonafluorobutanesulphonate or a silicone compounds such as polyalkylsiloxane, e.g., polymethylsiloxane. The additive in the phosphoric acid decreases polarization of the cathode and increases cell efficiency by increasing $O_2$ solubility.

It is reported in Surface Electrochemistry J. O.M. Bockris and S. U. M. Khan, Plenum Press, p 887 that aqueous solutions of trifluoromethanesulfonic acid show a higher oxygen reduction rate on a platinum catalyst than solutions of phosphoric acid, presumably because of an improved oxygen solubility in the medium and a lower adsorption of the acid at the Pt catalyst surface. Unfortunately, neat trifluoromethanesulfonic acid has high a vapor pressure and cannot be used at the operating conditions of elevated temperature fuel cells .

Alberti, et al in the article entitled, Solid State Protonic Conductors, Present Main Application and Future Prospects, Solid State Ionics, 145 (2001) 3-16 disclose a wide variety of proton conducting membranes for intermediate temperature (150-300°C) fuel cells. Examples of proton conducting materials include proton-conducting polymers impregnated with hydrophilic additives, such as heteropolyacids, zirconium phosphate, sulfated zirconia; sulfonated polyether ketones; and solid acid electrolytes, such as perfluorinated sulfonic acid polymers.

Yang, et al, in the article, Approaches And Technical Challenges To High Temperature Operation Of Proton Exchange Membrane Fuel Cells, Journal of Power Sources, 103, (2001), 1-9 disclose fuel cells employing a platinum anode catalyst. Composite membranes based upon perfluorinated sulfonic acids (Nafion) and zirconium hydrogen phosphate as well as imidazole/Nafion membranes are suggested. Reports suggest that these fuel cells suffer from water loss, and therefore, a loss of membrane ionic conductivity.

US 6,059,943 discloses solid-state, inorganic-organic composite membranes useful as ionically conducting membranes in electrochemical devices. Examples are based upon oxidation resistant polymeric matrices filled with inorganic oxide particles. Organic polymers include polytetrafluoroethylene, perfluorosulfonic acid, polysulfones and the like, while inorganic oxides are based upon heteropolytungstates, heteropolymolybdates, anions of tantalum and niobium, etc.

Rupich, et al in the article entitled Characterization of Chloroclosoborane Acids as Electrolytes for Acid Fuel Cells, J. Electrochem. Soc. 1985, 132, 119 disclose hydrated chloroclosoborane acids, $H_2B_{10}Cl_{10}$ and $H_2B_{12}Cl_{12}$ as alternative liquid electrolytes for intermediate temperature fuel cells. However, these hydrated acids show low conductivity above 100°C at water vapor pressure below 250 torr. The acids solidify above 145°C at water vapor pressures below 600 torr. Aqueous solutions of these acids also show poor oxidative stability and significantly, a stronger adsorption on the Pt catalyst than aqueous solutions of sulfuric acid, which itself adsorbs strongly at the Pt cathode.

In its most general enhancement a capacitor consists of two electrodes that are separated by a dielectric medium. Energy storage in a capacitor is achieved by a separation of charges at the positive and negative electrodes. The quantity of electricity or charge stored, q is given by q=CV where V is applied voltage and C is the capacity; the energy stored is given by ½ $CV^2$. This capacity of the device is in turn a function of the surface area of the electrodes, the distance between the electrodes and the nature of the dielectric or other medium which separates the electrodes. The charge stored in capacitors that employ a solid ceramic, mica or similar separating medium, as in capacitor devices common employed in electronic applications is relatively small. However, a much larger charge and energy storage can be achieved when ion-conducting electrolytes are employed as the electrodes' separating medium.

Following B. E. Conway et al, "Electrochemical Supercapacitors" Kluwer Academic/Plenum Publ. 1999 Chapters 1 and 2, capacitors that employ ion-conducting electrolytes are likewise referred to here as "electrochemical supercapacitors". The equivalent term ultracapacitors is also sometimes used. There are two distinct classes of electrochemical supercapacitors: 1) Double layer capacitors where charge is stored as an electrical double layer at the electrodes' interface. Energy is stored via this charge-separation process with no electron transfer occurring across the electrode/electrolyte interface. The charge storage is achieved by purely electrostatic i.e. non-Faradaic processes. 2) "Faradaic process" electrochemical capacitors where there is a charge transfer across the electrical double layer, thus providing an additional mechanism for electrical energy storage. This charge-transfer is associated with a reversible redox or reversible adsorption process at the electrolyte/electrode interface. The electrode potential V here is a function of the charge q passed such that a derivative, dV/dq that is equivalent to a capacitance (often referred to as a "pseudocapacitance") can be experimentally measured. A summary of such Faradaic process electrochemical capacitors, their distinctive electrochemical characteristics and properties is provided by B. E. Conway et al: "The role and utilization of pseudocapacitance for energy storage by supercapacitors" in Journal of Power Sources, 66, page 1-14 (1997).

A double layer electrochemical capacitor comprises a pair of high surface area electrically conducting electrodes usually consisting of a highly conducting high surface area carbon. The electrodes are separated by a thin film of an electrolyte. The latter may consist of an electrolyte salt dissolved in water or usually in an organic solvent, in which case the electrolyte solution is supported within the pores of a thin porous material. It may also be a polymeric electrolyte consisting of an electrolyte salt with mobile ions in a polymer or polymer gel matrix. Since the stored energy in a capacitor is a direct function of the *square* of the applied voltage it is important that the electrolyte be utilized over the widest possible electrical potential "window". This requires a broad range of electrochemical stability for both the organic solvent and for the salt electrolyte dissolved therein. For double layer capacitors this translates into having a cation that is relatively, not easily reduced and an anion that is difficult to oxidize i.e. an electrochemical stability at respectively, low (negative) and high (positive) electrochemical potentials. In order to minimize internal resistance in the capacitor device, particularly for high power applications it is important to have electrolyte salt/organic solvent and electrolyte salt/organic solvent and electrolyte salt/polymer combinations that have a high ionic conductivity, which is strongly related to the solubility of the electrolyte salt in the medium. The article by K. Xu, M. S. Ding, T. R. Jow *et al* "Quaternary Onium Salts as Nonaqueous Electrolytes for Electrochemical Capacitors" is provided as a reference to the above requirements for electrochemical capacitor (specifically double-layer capacitor) electrolytes.

In European Application EP 230907 (1987) T. Morimoto et al describe an electrical double layer capacitor comprising as an electrolyte a quaternary phosphonium salt, $PR_4^+$ with $BF_4^-$, $PF_6^-$ $R_fSO_3^-$ etc. where R = alkyl, as counter anions.

In US 4730239, (1988) J. Currie et al, teach the use of a polymer gel electrolyte consisting of for example, a polyether, the $LiClO_4$ salt and a plasticizer such as ethylene glycol. S. Mita et al in EP 908905 (1998) cite the use of specific carbonic acid esters as non aqueous solvents for double layer capacitor electrolyte salts. T. Fujino *et al* in US Appl. US 2005162813 describe an electrolyte solvent which contains propylenecarbonate and a cycloalkane additive.

In WO 9960587 (1999) Y. Maletin et al teach the application of salts of the N,N-dialkyl-1,4-diazabicyclo[2.2.2]octanediium (DADACO) cation with $BF_4^-$ and $PF_6^-$ counter anions dissolved in aprotic polar solvents for use in electrochemical double layer capacitors.

The "Faradaic process" or pseudocapacitor type of electrochemical capacitor concept has been embodied mostly with pi-conjugated electrically conducting polymer electrodes where redox doping and undoping of the polymer result effectively, in a capacitance (pseudocapacitance) phenomena. This is described under the title of "Polymer Supercapacitors" by M. Mastragostino et al in "Advances in Lithium-Ion Batteries" W. A. von Sckalkwijh and B. Scrosati (Eds), Kluwer Academic, Plenum Publ. Chapt. 16 (2002). This reference and also US 6,252,762B1 (2001) describe supercapacitor/Li ion battery hybrid devices consisting of a high surface carbon ionic double layer capacitor electrode and respectively, poly(3-methyl thiophene) and $Li_4Ti_5O_{12}$ redox reversible $Li^+$ ion-insertion counter electrodes.

All of these cells require electrolyte or ion carrying systems. The chemical and thermal stability of these electrolytes is usually critical to the long term, highly reversible use of these cells. EP1624519 discloses a proton conducting medium for use in an electrochemical device comprising a proton conducting electrolyte comprising the formula: $H_aM_bQ•nH2O$ where H is a proton, M is a cation, Q is the fluoroborate or fluoroheteroborate anion. US6335466 discloses compounds comprising a fluorinated polyhedral aminoborate anion. High capacity rechargeable electrochemical cell - has alkali metal anode, solid cathode and electrolyte of chelated, closo-borane or closo-carborane solution. EP1513215 discloses polyfluorinated boron cluster anions for lithium electrolytes and FR2523770 discloses solid polymeric electrolytes comprising solid solutions of alkali metal closo-borane(s) in (co)polymer, useful in the production of electrochemical generators.

BRIEF SUMMARY OF THE INVENTION

The invention relates to an improvement in conducting media of capacitors. The invention is a capacitor according to claim 1. Subject matter disclosed in this application and not falling under the scope of claim 1 is not forming part of the present invention. A battery is comprised of an oxidizing positive electrode or cathode, a reducing negative electrode or anode, separated by a porous separator and electrochemically connected via an ion conducting media or electrolyte. A lithium ion battery comprises lithium containing positive and negative electrodes and a lithium ion conducting medium. A fuel cell is comprised of a hydrogen anode, or negative electrode, an oxygen cathode, or positive electrode and a proton conducting medium. A capacitor comprises positive and negative electrodes, which are capable of storing charge on the surface. The electrodes are separated by a positive and negative ion containing conducting electrolyte. In certain embodiments one or both of the capacitor electrodes can undergo oxidation and reduction during charge and discharge.

The improvement in said conducting media resides in the use of a fluoroborate or fluoroheteroborate comprising the formula:

$$HaM_bQ•nH_2O$$

where H is a proton, M is a cation, Q is the fluoroborate or fluoroheteroborate anion; the salt is associated with n molecules of water of hydration. The anion may be monovalent or divalent, the cation may have an oxidation state ranging from +1 to +3; from this, the subscript a is so chosen as to render the formula electrically neutral. For anhydrous applications as in batteries and electrochemical capacitors both a and n are 0.

M is any cation which is stable over the electrochemical window of the electrochemical cell and serves as an appropriate ion carrier for the particular cell application, e.g., M comprises lithium for a lithium or lithium ion cell and $Mg^{2+}$ for a magnesium battery. For a variety of electrochemical cell applications, suitable cations comprise those of the Alkali (Group 1) and Alkaline Earth (Group 2) and selected cations of the Lanthanide series elements. For example, in lithium or lithium ion batteries, M comprises lithium cation, in magnesium batteries M comprises magnesium, in calcium batteries M comprises calcium, and in aluminum batteries M comprises aluminum. Organic tertiary and quaternary ammonium cations, which are also relatively oxidation and reduction resistant may be used and are common in capacitor applications.

In fuel cells, the hydrated acid, $H_aQ•nH_2O$ having (hydrated) protons as the cations may be expected to offer the highest conductivity. The introduction of cations however, provides a wide measure of control over the physical properties (and to some extent, the electrical conductivity) of the system particularly its melting point and therefore the physical state of the protonic conductor at the fuel cell's operating conditions.

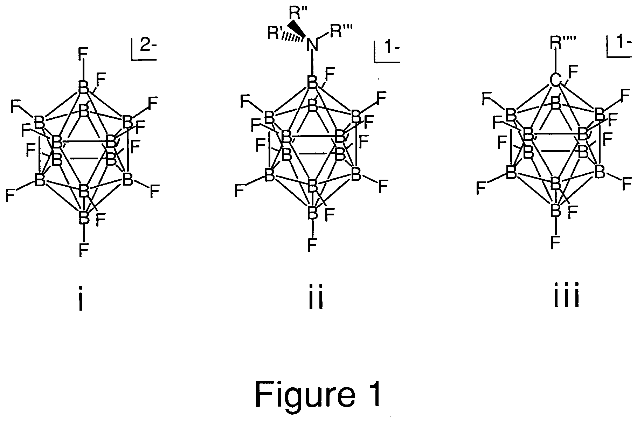

The anion Q comprises a polyhedral fluoroborate or heterofluoroborate (e.g., as illustrated in Figure 1). The thus represented compositions are twelve atom boron icosahedral clusters that are functionalized at boron by fluorine, hydrogen, chlorine, bromine or hydroxyl, -OH. Included are three classes of anions:

i) The *closo*-dodecaborate (-2) anion of composition $(B_{12}F_xZ_{12-x})^{2-}$ where Z comprises H, Cl, Br or OR, where R comprises H, alkyl or fluoroalkyl, or at least one polymer, and x is at least 3 on an average basis but not more than 12. The R group may be part of a polymer chain to which the anion is anchored.

ii) The closo-ammoniofluoroborate (-1) anion compositions of formula $((R'R''R''')NB_{12}F_xZ_{(11-x)})^-$, where N is bonded to B and each of R', R'', R''' comprise a member independently selected from the group consisting of hydrogen, alkyl, cycloalkyl, aryl and a polymer; Z comprises H, Cl, Br, or OR, where R comprises H, alkyl or perfluoroalkyl or a polymer, and x is an integer from 0 to 11.

iii) The c/oso-monocarborate (-1) anion compositions of formula $(R''''CB_{11}F_xZ_{(11-x)})^-$, where R'''' is bonded to C and comprises a member selected from the group consisting of hydrogen, alkyl, cycloalkyl, aryl, and a polymer, Z comprises H, Cl, Br, or OR, where R comprises H, alkyl or perfluoroalkyl or a polymer, and x is an integer from 0 to 11.

The polyhedral fluoroborates can be produced by a direct fluorination of the corresponding cluster borates, usually in liquid acid media. The acid: $H_aQ•nH_2O$, the salt: $M_bQ•nH_2O$ and the acid salt $H_aM_bQ•nH_2O$ can be prepared in this manner. Other halogens, Cl and Br may be introduced into the fluoroborates by a direct reaction of the latter with these elements.

The chemical stability of the salts of the polyhedral fluoroborates provide advantages where the compositions are used as conducting media in electrochemical devices, particularly at moderate temperature ranges (e.g., about 80 to about 250°C). Examples of electrochemical devices where salts of polyhedral fluorborate anions provide significant advantages as part of the necessary conducting media include lithium and lithium ion batteries, capacitors including, without limitation, electrochemical supercapacitors and fuel cells. Other devices include water or steam electrolyzers for the production of hydrogen and oxygen (e.g.,essentially fuel cells operating in reverse), and electrochemical $H_2$ sensors which function by measuring an $H_2$ (gas)/ $H^+$ (solid or liquid) electrochemical potential, are examples of such other devices.

The fluoroborate salts provide, for electrochemical devices where conducting media are needed, a useful combination of physical, electrical and chemical properties. The compositions can function in the both solid and liquid state and as part of aqueous and non-aqueous solutions. Because of their desirable thermal and chemical stability, these fluoroborate salts are particularly suitable in the high voltage lithium ion battery and electrochemical supercapacitor applications, where their stability can provide longer device life and improved operation at elevated temperatures. They also offer significant advantages as proton conducting electrolytes for $H_2/O_2$ fuel cells that operate at the intermediate temperature range of from about 80°C to about 250°C, particularly at the higher temperatures of this range (150°C-250°C) where the $O_2$ electrode is more efficient and where the cell is less sensitive to CO poisoning. The proton conductors display both as liquids and solids, a high electrical conductivity, an affinity for water, resistance to reduction (by $H_2$) and oxidation (by $O_2$), among other desirable properties. They are typically better solvents for oxygen than the currently used fuel cell liquid electrolyte ($H_3PO_4$) and have superior electrochemical properties than $H_3PO_4$ which by permitting the attainment of higher current densities allows the construction of higher power density fuel cells.

BRIEF DESCRIPTION OF SEVERAL VIEWS OF THE DRAWINGS

Figure 1 illustrates certain dodecaborate structures that can be employed in the inventive electrolyte.

Figure 2 is a graphical illustration of a TGA analysis at 220C.

Figure 3 is a graphical illustration of a TGA analysis at 200C.

Figure 4 is a graphical illustration of a TGA analysis at 250C.

Figure 5 is a graphical illustration of a RDE voltammogram.

Figure 6 is an impedance plot at 182C.

Figure 7 is an impedance plot of an assembly containing a membrane.

Figure 8 is an impedance plot of an assembly containing a membrane exposed to a heterborate acid.

Figure 9(a) is a graphical representation of a cyclic voltammogram (CV).

Figure 9(b) is a graphical representation of a CV at more negative potentials.

Figure 10(a) is a graphical illustration of a variation of capacitance with voltage for a test electrolyte.

Figure 10(b) is a graphical illustration of a variation of capacitance with voltage for a control electrolyte.

Figure 11(a) is a graphical illustration of a variation of capacitance with voltage for a test electrolyte.

Figure 11(b) is a graphical illustration of a variation of capacitance with voltage for a control electrolyte.

Figure 12 is a schematic of a capacitor test cell.

Figure 13 is a graphical illustration of constant-current voltage cycling of test and control cells.

Figure 14 is a graphical illustration of successive constant current cycling of test and control cells.

Figure 15 is a graphical illustration of charging capacitance of test and control cells.

## DETAILED DESCRIPTION OF THE INVENTION

The invention relates to an improvement in conducting media of capacitors. Its scope is the scope of independent claim 1. A battery is comprised of an oxidizing positive electrode or cathode, a reducing negative electrode or anode, separated by a porous separator and electrochemically connected via an ion conducting medium or electrolyte. The electrolyte when in the form of an organic polymer can also function as a separator. A lithium ion battery comprises lithium containing positive and negative electrodes and a lithium ion conducting medium. A magnesium battery comprises magnesium containing electrodes and magnesium conducting media. A fuel cell is comprised of a hydrogen anode, or negative electrode, an oxygen cathode, or positive electrode and a proton conducting medium. A capacitor comprises positive and negative electrodes, but which are capable of storing charge on the surface. The electrodes are separated by a positive and negative ion containing conducting electrolyte. In certain embodiments one of the capacitor electrodes can undergo oxidation and reduction during charge and discharge. The improvement in said conducting media resides in the use of a fluoroborate or fluoroheteroborate comprising the formula:

$$M_aQ \cdot nH_2O$$

where, M comprises a cation, Q comprises a fluoroborate or fluoroheteroborate anion; the acid or acid salt is associated with n molecules of water of hydration. The anion may be monovalent or divalent, the cation may have an oxidation state ranging from +1 to +3; from this, the subscript a is so chosen as to render the formula electrically neutral. For anhydrous applications as in batteries and in non-aqueous solvent electrochemical capacitors both a and n are zero.

M comprises any cation which is stable over the electrochemical window of the electrochemical cell and serves as an appropriate ion carrier for the particular cell application, e.g., M comprises lithium for a lithium or lithium ion cell, and M comprises magnesium for a magnesium cell, M comprises calcium for calcium cell and M comprises aluminum for an aluminum cell. Also included is the embodiment where the proton conducting medium comprises a mixture of this acid and the acid salt, $HaM_bQ \cdot nH_2O$ in molar proportions ranging from about 1:10 to about 100:1 of the acid to the acid salt, typically about 1:1 to about 10:1 of the acid to the acid salt.

For fuel cell applications which require proton conductivity, the proton may be free (as $H^+$) or solvated with one or more water molecules eg. as the hydroxonium ion, $H_3O^+$. M comprises any cation which is stable over the entire electrochemical window of the fuel cell. Thus M has to be resistant to reduction by hydrogen at the fuel cell's anode and to oxidation by oxygen at the fuel cell's cathode. The tabled electrochemical reduction potentials (E° values) as in the CRC Handbook of Chemistry and Physics, D. R. Lide (Ed) 74th Ed; pages 8-21 to 8-31, may be used as an approximate guide for choosing an appropriate cation. Thus a suitable cation will likely be one where (a) its reduction to a lower oxidation state has a lower (more negative) E° than that of the standard hydrogen electrode: E° for $2H^+ + 2e^- = H_2$ is 0 V and (b) an oxidation of the cation to a higher valent state with oxygen is precluded with cations for which E° for the corresponding higher valent state is higher (more positive) than that for the reduction of oxygen in acid media: $O_2 + 4H^+ + 4e^- = 2H_2O$ for which E° = 1.229V. Examples are the monovalent and divalent cations respectively of Groups 1 and 2 and the Periodic Table eg. $Li^+$, $Na^+$ (for $Na^+ + e^- = Na$, E° is -2.71V) Mg, Ca (for $Ca^{2+} + 2e^- = Ca$, E° is -2.87 V) also the trivalent cations of Group 13, $Al^{3+}$ (for $Al^{3+} + 3e^- = Al$, E° = -1.67V), $Ga^{3+}$ etc.

Higher valent cations of Groups 1 and 2 are not known and would be expected to have even more negative E° values thus satisfying criterion (b). Examples from other Groups of the Periodic Table that satisfy both criteria are the cerium (+3) ion; E° for $Ce^{3+} + 3e^- = Ce$ is -2.34V and E° for $Ce^{4+} + e^- = Ce^{3+}$ is 1.72V; and cobalt (+2): E° for $Co^{2+} + 2e = -0.28V$ while for $Co^{3+} + e = Co^{2+}$, E° = 1.92V.

Tertiary and quaternary alkyl or mixed alkyl, aryl ammonium ions of formula $R_3NH^+$ and $R_4N^+$ respectively, are relatively reduction and oxidation resistant and would therefore also be useful in electrochemical supercapacitor applications or as cations which comprise the proton conductor. R here comprises any suitable alkyl, phenyl or alkyl substituted phenyl group. Additional examples can comprise at least one member selected from protonated forms of nitrogen heterocyclic or nitrogen and oxygen containing heterocyclic bases would be suitable as cations, (base)$H^+$ which comprise the proton conductor. Examples of nitrogen heterocyclic bases comprise at least one of pyridine, piperidine, quinoline, isoquinoline, pyrrole, indole, imidazole, benzimidzaole, imidazolidine; and N-methyl imidazole. The following are examples of heterocyclic compounds containing both N and O heteroatoms: oxazole, benzoxazole, and morpholine.

A combination of two or several different cations can be employed as the cation M for a battery electrolyte conductor, as part of an electrochemical supercapacitor, or proton conductor eg. $Li^+ K^+$, $Ca^{2+} Li^+$ and so on. In a fuel cell application, the presence of the cation is not necessary for protonic conduction, but it provides an additional means of hydrating the salt and this is particularly true for the smaller (more Lewis acidic) cations, e.g., $Li^+$ which can tightly coordinate water in this case as $Li(H_2O)_4{}^+$. The hydration is useful for maintaining liquidity (when this is desired) and may assist in proton transfer, provide proton conductivity pathways. On the other hand, the larger (higher radius to charge ratio) less hydrophilic cations (eg. $Cs^+$) will tend to raise the melting point of the acid salt and yield compositions that are solid state protonic conductors.

The group Q comprises a member selected from the following fluoroborate (i) and heterofluoroborate (ii and iii) anions (e.g., the structure of which is illustrated in Figure 1):

i) The *closo*-dodecaborate (-2) anion compositions of formula $(B_{12}F_xZ_{(12-x)})^{2-}$, where Z comprises H, Cl, Br, or (OR), where R comprises H, alkyl or fluoroalkyl or a polymer chain to which the anion is tethered; x is at least 3 on an average basis but not more than 12. These compositions comprise icosahedral clusters containing twelve boron atoms where each boron is attached as defined to a hydrogen, a halogen atom, hydroxyl group or the OR group as defined above. These fluoroborate anions, as components of specific salts, $M_bQ$ and of the corresponding acids $(H_aM_bQ)$ can be utilized as improved fuel cell proton conductors.

ii) The *closo*-ammoniofluoroborate (-1) anion compositions of formula $((R'R''R''')NB_{12}F_xZ_{(11-x)})^-$, where N is bonded to B and each of R', R'', R''' comprises a member independently selected from the group consisting of hydrogen, alkyl, cycloalkyl, aryl and a polymer, Z comprises H, Cl, Br, or (OR), where R comprises H, alkyl or fluoroalkyl or a polymer; x is an integer from 0 to 11. These anion compositions are also icosahedral boron clusters of 12 boron atoms where one of the borons is attached to an ammonia group (NR'R''R'''), with F, H, Cl, Br and OH groups attached to the remaining borons. These compositions provide novel and unexpected utility as components of fuel cell proton conducting electrolytes.

iii) The c/oso-monocarborate (-1) anion compositions of formula $(R''''CB_{11}F_xZ_{(11-x)})^-$, where R'''' is bonded to C and comprise at least one member selected from the group consisting of hydrogen, alkyl, cycloalyl, aryl, and a polymer; Z comprises H, Cl, Br, or (OR), where R comprises H, alkyl or fluoroalkyl or a polymer; and x is an integer from 0 to 11. These fluorinated c/oso-monocarborate anion compositions are also polyhedral clusters but comprised of 11 borons and a single carbon atom. As defined above the borons are partially or fully fluorinated, and the carbon atom is connected to a single organic substituent group. Compositions provide novel and unexpected utility as the anion components of fuel cell proton conducting electrolytes.

Of the above three borate anion classes, structures of group i) being divalent anions provide the maximum number of protons (a=2 in formula) and therefore may provide the highest proton conductivity. Synthetic routes for manufacturing polyhedral hydridoborates (fluorinated polyhedral borate precursors) are disclosed in "Polyhedral Boranes", E. L. Muetterties and W. H. Knoth, Marcel Dekker, Inc. NY 1 1968.

The heteroborates of groups ii and iii above have the advantage of being easily functionable at their nitrogen and carbon atom sites respectively. Of the three groups, the fluorocarboranes (iii) are the most weakly coordinating anions from which follows that their protonated forms (HQ $\cdot nH_2O$) will be the strongest acids implying a higher mobility and therefore a higher conductivity for their (single) proton.

A lithium or lithium ion secondary battery, capable of multiple cycles of charging and discharging, is typically dependent on an electrolyte conducting solution carrying lithium ions. Two desirable properties for lithium battery electrolyte solutions are: (a) a high conductivity in a non-aqueous ionizing solution, and (b) chemical stability to heat, hydrolysis and particularly to electrochemical cycling over a wide potential range. Other desired features of lithium electrolyte solutions include: high flash point; low vapor pressure; high boiling point; low viscosity; good miscibility with solvents customarily employed in batteries, especially ethylene carbonate, propylene carbonate and alpha-omega-dialkyl glycol ethers; good electrical conductivity of their solutions over a wide temperature range, and tolerance to initial moisture content.

The present lithium secondary battery is characterized in that the lithium based electrolyte salt for forming lithium electrolyte solutions is based upon a lithium fluorododecaborate comprising the formula:

$$Li_2B_{12}F_xZ_{12-x}$$

where x = > 4 or 5 (average basis), usually at least 8, and typically at least 10 but not more than 12 and Z represents H, Cl, and Br. Specific examples of lithium based fluorinated dodecaborates include: $Li_2B_{12}F_8H_4$, $Li_2B_{12}F_9H_3$, $Li_2B_{12}F_{10}H_2$ $Li_2B_{12}F_{11}H$ and mixtures of salts with varying x such that the average x = 9 or 10 and $Li_2B_{12}F_xCl_{12-x}$ and $Li_2B_{12}F_xBr_{12-x}$ where x is 10 or 11.

In the formulation of an electrolyte solution for a lithium battery, the lithium salt can be carried in an aprotic solvent. Typically, these aprotic solvents are anhydrous, and anhydrous electrolyte solutions are useful. Examples of aprotic solvents or carriers for forming the electrolyte systems comprise at least one of dimethyl carbonate, ethyl methyl carbonate, diethyl carbonate, methyl propyl carbonate, ethyl propyl carbonate, dipropyl carbonate, bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, etc., fluorinated oligomers, dimethoxyethane, triglyme, dimethylvinylene carbonate, tetraethyleneglycol, dimethyl ether, polyethylene glycols, sulfones, and gamma.-butyrolactone.

In another embodiment, the electrolyte system can comprise an aprotic gel polymer carrier/solvent. Suitable gel polymer carrier/solvents comprise at least one of polyethers, polyethylene oxides, polyimides, polyphosphazines, polyacrylonitriles, polysiloxanes, polyether grafted polysiloxanes, derivatives of the foregoing, copolymers of the foregoing, crosslinked and network structures of the foregoing, blends of the foregoing, and the like, to which is added an appropriate ionic electrolyte salt. Other gel-polymer carrier/solvents comprise those prepared from polymer matrices derived from polypropylene oxides, polysiloxanes, sulfonated polyimides, perfluorinated membranes (NafionTM resins), divinyl polyethylene glycols, polyethylene glycol-bis-(methyl acrylates), polyethylene glycol-bis(methyl methacrylates), derivatives of the foregoing, copolymers of the foregoing, crosslinked and network structures of the foregoing.

The solution comprising a combination of aprotic solvent and fluorinated lithium dodecaborate salt employed for forming the lithium based electrolyte for the lithium battery typically will have a concentration of lithium fluorododecaborate of at least 0.05 to 1 molar and typically from about 0.1 to about 0.6 molar..Useful ranges of lithium salt in the electrolyte are from about 0.2 to about 0.5 molar. Higher concentrations tend to become too viscous and, the bulk conductivity characteristics can be adversely affected. Also, solutions formed from lithium based fluoroborates having an increased concentration of halogen atoms other than fluorine may show an increase viscosity to the lithium fluoroborates having higher fluorine content.

Other lithium based salts can be used in combination with the lithium based fluoroborates, e.g. $LiPF_6$, lithium perchlorate, lithium hexafluoroarsenate, lithium trifluoromethylsulfonate, lithium tetrafluoroborate, lithium bromide, and lithium hexafluoroantimonate as desired. The can be used in combination with other salts in any effective amounts. Typically, if such salts are used, they are added in relatively small amounts to the inventive lithium fluoroborate based electrolyte or the lithium based fluoroborates are added to the batteries employing other based lithium salt in small amounts.

The lithium battery employing the lithium fluorododecaborate electrolyte can be any using a suitable lithium containing cathode and a negative anode. In forming the lithium battery, the negative electrodes for use in a lithium secondary battery typically can be based generally upon non-graphitizing carbon, natural or artificial graphite carbon, or tin oxide, silicon, or germanium compound. Any of the conventional anode compositions may be used in combination with the lithium fluorododecaborate electrolytes here.

The positive electrode for use in lithium secondary batteries typically can be based upon a lithium composite oxide with a transition metal such as cobalt, nickel, manganese, among others, or a lithium composite oxide, part of whose lithium sites or transition metal sites is replaced with cobalt, nickel, manganese, aluminum, boron, magnesium, iron, copper, among others, or iron complex compounds such as ferrocyan blue, berlin green, among others. Specific examples of lithium composites for use as positive electrodes comprise $LiNi_{1-x}Co_xO_2$ and lithium manganese spinel, $LiMn_2O_4$. The former composite presents significant safety concerns due to the very high oxidizing potential of Ni(IV). The latter composite is significantly less oxidizing than the Ni(IV) lithium battery and leads to far better redox kinetics and much higher power densities than the nickel cobaltate cathode.

The separator for the lithium battery can comprise a microporous polymer film. Examples of polymers for forming films comprise: nylon, cellulose, nitrocellulose, polysulfone, polyacrylonitrile, polyvinylidene fluoride, polypropylene, polyethylene, polybutene, among others. Ceramic separators, based on silicates, can also be used.

The battery is not limited to particular shapes, and can take any appropriate shape such as cylindrical shape, a coin shape, and a square shape. The battery is also not limited to particular capacities, and can have any appropriate capacity for both small appliances and power storage or electric cars.

For a fuel cell application, the acid salt of said formula $H_aM_bQ \cdot nH_2O$ is associated with a variable number (n=1 to 1000) of water molecules of hydration. At both the anode and cathode compartments of the fuel cell the acid salt will be in an equilibrium with water vapor. Some retention of water is necessary for providing a mechanism for proton transport and also to provide required liquidity, if required. Reference: "Proton Conductors", P. Colomon Ed. Cambridge Univ.

Press (1992), Chapter 2.

The proton conductor, $H_aM_bQ \cdot nH_2O$ can be either solid or liquid at the operating conditions of the device. In a fuel cell with the latter embodiment the said liquid is held in an inert porous support and functions both as a proton carrier and as a membrane which separates the anode and cathode compartments of the cell. A liquid is expected to be advantageous because of its expected higher conductivity due to an expected more facile proton transfer in a liquid medium. To achieve a liquid form, the hydrate level (n) is increased sufficiently to generate a liquid. Typically, when hydrogen is the only cation, n is at least 6, generally at least 8 and usually at least 10. As described below, the presence of other cations will effect the melting point and the state of hydration.

The proton conducting medium can also comprise a mixture comprising the acid $H_aQ \cdot nH_2O$ and the salt $M_bQ \cdot nH_2O$ in molar proportions ranging from about 1:10 to about 100:1 of the acid to the salt, typically about 1:1 to about 10:1 of the acid to the acid salt.

Solid state proton conductors have the advantage of also providing without the need of other components, the required physical separation between the fuel cell's compartments. Solid forms of the proton conductor of formula $H_aQ \cdot nH_2O$ can be used in the fuel cell. Solid forms generally exist when n is less than 6. Solid proton conductors can also be obtained by doping the fluorododecaborate acids with inorganic cations (eg $M = K^+$, $Ba^{2+}$ etc.) i.e. the acid salts, $H_aM_bQ \cdot nH_2O$, or suitable sources of these cations for forming solid compositions with high melting points.

The polyhedral fluoroborate, $H_aM_bQ \cdot nH_2O$ proton conductors can be generated by a direct fluorination of the corresponding polyhedral hydridoborates in a liquid medium. Or by the direct fluorination of a selected salt of a c/oso-borohydride followed by an acid metathesis; the replacement of the cation with a proton as described in Examples 3 to 5. A partial exchange of such a salt, $M_bQ \cdot nH_2O$ with protons leads to the acid salt of formula 1, namely $H_aM_bQ \cdot nH_2O$.

In direct fluorination, fluorine is typically diluted with an inert gas, e.g., nitrogen, to a concentration of from about 10 to about 40 %. The liquid medium or carrier for the hydridododoborate salt is one that is not substantially reactive with fluorine. Conventional mediums comprise liquid hydrogen fluoride, HF. Other liquids can be used in the process and comprise water, organic acids such as formic acid, acetic acid, trifluoroacetic acid and the like. The acidity of the liquid medium, particularly the liquid medium employed in the fluorination of the hydridododoborates, can affect the solubility of the precursor hydridoborates and the fluorinated hydridoborate salt and effect an acidity change therein. It is desirable for the medium be designed to maintain soluble both the hydridoborates and the fluorinated hydridododoborate salt product.

Radical scavengers can be used in the fluorination process to reduce byproduct formation and improve reaction efficiency. In aqueous solutions, radical scavengers appear to limit the formation of hydrogen peroxide, or HOF, which may be generated with fluorine. Radical scavengers are used where organic acids, such as formic acid, are employed to adjust acidity, and inhibit the side-reaction of fluorine with the solvent, thereby improving fluorination efficiency. Examples of radical scavengers comprise oxygen, and nitroaromatics. The introduction of a small amount of air to the liquid medium removes free radicals generated in the direct fluorination of the hydridododoborate salts.

Fluorination of the polyhedral hydridoborate anions can be carried out over a temperature range sufficient to maintain liquid phase conditions. For effecting the fluorination of the polyhedral borate anions the temperature is from about -30 to about 100°C, typically from about 0 to about 20°C. Pressures during fluorination are such as to maintain liquid phase conditions, typically atmospheric.

The extent of fluorination of the polyhedral hydridoborates and of the borate salts can be controlled by varying the reaction conditions and reagent stoichiometries. For the preparation of a mixed halogen fluoroborate (Q where Z comprises Cl or Br; or Cl or Br and H) the partially fluorinated product is reacted with $Cl_2$ or $Br_2$ [e.g., US Patent No.3,551,120; 1970] C/oso-borates comprising OH substituient groups can be prepared by treatment of a polyhedral hydro-c/oso-borate with 40% sulfuric acid [Peymann, T.; Knobler, C. B.; Hawthorne, M. F. Inorg. Chem. 2000, 39, 11 63]

Fluoroborate and heterofluoroborate anions (e.g., as illustrated in Figure 1) wherein the ring substituents on boron, Z in the above formulae comprise OR where R=H, alkyl or fluoroalkly or a polymer chain to which the anion is tethered may be prepared by reacting, for example, under acidic conditions a moiety containing hydroxyl functionality such as an alcohol or fluoroalcohol with a salt of the anion. Examples of processes that can be used for reacting alcohols with a salt are described in the following literature references: T. Peymann et al, Inorg. Chem., 2000, 39, 1163; W. H. Knoth et al, J. Am. Chem. Soc., 1964, 3973 and H. C. Miller, E. C. Muetheries, US Patent No. 3,551,1 120. For example, in order to produce $Na_2B_{12}F_{12-x}(OCH_2CF_3)_x$ where x = 1 to 3, sodium dodecaborate $Na_2B_{12}H_{12}$ is reacted with trifluoroethanol in the presence of boron trifluoride, followed by fluorination of the product with $HF/F_2$. Details of this process are provided in Example 22; and the preparation of salts of $[B_{12}F_{11}(OCH_3)]^{2-}$ is described in Example 23.

The hydrated fluoroborate acids $H_aQ \cdot xH_2O$. (where x is at least 5 and more usually x is at least 8) can be formed from the fluoroborate salts. One method involves the treatment of an aqueous solution of the barium salts, BaQ or $BaQ_2$, or an aqueous solution of the calcium salts, CaQ or $CaQ_2$ with sulfuric acid, or with aqueous HF, and removing the insoluble salts, $BaSO_4$ and $CaF_2$ by filtration. Water can be removed by distillation from the aqueous solution of the hydrated fluoroborate until the desired acid/ water ratio is achieved.

As a proton conductor for use in the proton conducting medium of a fuel cell, the fluoroborate hydrate of the formula, $H_aM_bQ \cdot nH_2O$, can be used alone or it can be mixed to form a solution with anhydrous phosphoric acid or other proton conducting compositions to produce a desired proton conducting medium. A fluoroborate acid/phosphoric acid medium, whether the fluoroborate is in liquid or solid form, can be used in any effective amount. Typical ratios are from about 0:2 to about 10:1 weight parts fluoroborate proton conductor per weight part phosphoric acid. Solid forms of the proton conductor can be used as additives to the inventive composition for varying as desired, the melting points of these mixtures.

The fluoroborate acids and acid salts can both be also blended with various polymers to form composite membranes. The blending may be accomplished by imbibing the polymer with a solution of the acid or salt in polar organic solvent, for example N-methyl pyrrolidone, and then at least partially removing the solvent from the resulting composite material. Alternatively, a polymeric film electrolyte may be cast from a solution that contains both the polymer and the acid or acid salt in a mutual solvent. The polymers suited for forming composite membranes may comprise polymeric perfluorosulfonic acids, polyethylene oxide, polyimides, polysulfones, in general polymeric matrices that comprise carbonyl, amine, ether, sulfone or sulfoxide polar functional groups that may be expected to have an interaction with the proton or metal cation of the electrolyte. Nitrogen or oxygen atom containing polymers, such as polyvinylpyridine, polyaniline, polybenziminazole, polybenzoxazoles, mixtures thereof, among others, are useful, where the interaction of the basic nitrogen or oxygen with the proton conductor is expected to facilitate the formation of a suitable blend of the two components. The liquid proton conductors can also be impregnated into a porous matrix, such as a microglass fibers, silicon carbide, boron nitride, or porous carbon materials, resulting in a proton conducting separation membrane. Physical blends of the solid proton conductors and the latter solid materials could also be employed.

In another embodiment, the group Q is attached to a polymer backbone via a chemical bond. All of these polymers typically rely on negatively charged Q functionalities (polymer-$Q^-$) as the stationary charge for mobile cations, such as $H^+$, $Li^+$, $Na^+$, $Mg^{2+}$ and others. These polymers can be used as ion-conducting electrolytes in lithium batteries, fuel cells and other electrochemical devices. The polymers with chemically attached Q functionalities are expected to have effective ion conductivities due to low coordinating abilities of the Q functionalities. These polymers can also be blended with fluoroborate salts, acids and/or their solutions to form gel electrolytes and to improve their ion conductivities. The polymer backbone may comprise at least one member selected from the group perfluoroalkyl, perfluoroethers, styrene, styrene-butadiene, fluorinated styrene, polyethers, polyethylene oxides, polyimides, polyphosphazines, polyacrylonitriles, polysiloxanes, polyether grafted polysiloxanes, derivatives of the foregoing, copolymers of the foregoing, crosslinked and network structures of the foregoing, blends of the foregoing, among others. When the group Q comprises $(B_{12}F_xZ_{(12-x)})^{2-}$, the anion may be chemically attached to the polymer backbone via a boron-oxygen-carbon-polymer bond. When Q comprises *closo*-ammoniofluoroborate (-1) anion compositions of formula $((R'R''R''')NB_{12}F_xZ_{(11-x)})^-$, the Q is attached to the polymer backbone via boron-nitrogen-polymer bond or via boron-oxygen-polymer bond. When Q comprises c/oso-monocarbonate (-1) anion compositions of formula $(R''''CB_{11}F_xZ_{(11-x)})^-$, the Q is attached to the polymer backbone via a boron-carbon-polymer bond or via a boron-oxygen polymer bond.

The proton conductors can be used in any suitable device where $H_2$ (gas) is in an electrochemical equilibrium with a proton source. This is one of the elementary processes in a fuel cell and the basis for the present proton conductors' utility herein. The conducting media can also be employed in hydrogen gas sensor devices where the $H_2$ partial pressure is a function of the measured potential of an electrode in contact with the proton conducting medium. Additionally, the proton conductors are useful for an electrolysis of water to produce $H_2$ and $O_2$ particularly at higher temperatures in the presence of steam where higher electrochemical efficiencies may be realized; these devices here are essentially fuel cells in reverse (e.g., as described in "Proton Conductors" *ibid* Chapter 32).

In an electrochemical capacitor the salt $M_bQ \cdot nH_2O$ dissolved in water can be used as an aqueous electrolyte. However, it is useful to employ high polarity organic solvents for the salt in an anhydrous form (n = 0) compositions (e.g., which can have a wider range of electrochemical stability). The energy stored in an electrochemical supercapacitor is typically proportional to the square of the voltage it is desirable that both the solvent and salt's counteranions posses the maximum electrochemical stability.

Suitable aprotic relatively polar organic solvents having a high electrochemical decomposition potential comprise the following: acetonitrile, propylene carbonate, δ-butyrolactone, δ-valerolactone, N,N-dimethylformamide, dimethylsulfoxide, sulfolane, nitromethane, N,N-dimethylacetamide, 3-methoxypropionitrile, 1-methyl-2-pyrrolidinone, and ethylene carbonate as a component in mixtures of one or more of the above.

The electrolyte system for the electrochemical capacitor of the present invention can comprise an aprotic gel polymer carrier/solvent. Suitable gel polymer carrier/solvents can comprise at least one of polyethers, polyethylene oxides, polyimides, polyphosphazines, polyacrylonitriles, polysiloxanes, polyether grafted polysiloxanes, derivatives of the foregoing, copolymers of the foregoing, crosslinked and network structures of the foregoing, blends of the foregoing, among others , to which is added an appropriate ionic electrolyte salt. Other gel-polymer carrier/solvents can comprise those prepared from polymer matrices derived from polypropylene oxides, polysiloxanes, sulfonated polyimides, perfluorinated membranes (NafionTM resins), divinyl polyethylene glycols, polyethylene glycol-bis-(methyl acrylates), polyethylene glycol-bis(methyl methacrylates), derivatives of the foregoing, copolymers of the foregoing, crosslinked and network structures of the foregoing.

For electrical double layer supercapacitor applications the cation M in formula $M_bQ$ for the anhydrous aprotic salt is usually stable to reduction at the most negative electrochemical potential. The choice of $M_b$ can affect the solubility of the parent salt $M_BQ$ in the aprotic solvent. Suitable cations are in general, tetraalkylammonium, $^+NR_1R_{-2}R_3R_4$, tetralkylphosphonium, $^+PR_1R_2R_3R_4$ salts where $R_1$ to $R_4$ are independently chosen from any linear or branched alkly group such as methyl, ethyl, n-propyl, iso-propyl and n-butyl groups. Useful cations of this class comprise tetramethylammonium, $^+N(CH_3)_4$, tetrabutylammonium $^+N(nBut)_4$ and tripropylmethylammonium, $^+N(n\text{-}Pr)Me$. Other "mixed" cations of this class may be prepared as described in the reference: K. Ku et al "Quaternary Onium Salts as Nonaqueous Electrolytes for Electrochemical Capacitors", J. of Electrochemical Soc., 148, (3), A267 (2001).

Organic cations of a cyclic or polycyclic structure may be used. Examples of such cations comprise: quinuclidinium, N-methyl pyridinium, and the doubly charged ions of: N,N-dialkyl-1,4-diazabicyclo[2.2.2]octanediium (DADABCO) and the cationic N-methyl derivatives of hexamethylenediamine.

Lithium, magnesium cations and the other Group 1 and Group 2 cations may be utilized in electrochemical capacitors to electrochemical potentials that are well positive of the voltage at which the metals are expected to deposit. The previously described quaternary ammonium organic cations can also be used in electrochemical capacitors.

The performance of salts of stable counteranions of this invention in electrochemical capacitor devices as exemplified by bis(tetraalkylammonium) fluorododecaborate salts is illustrated in Examples 19 to 21,

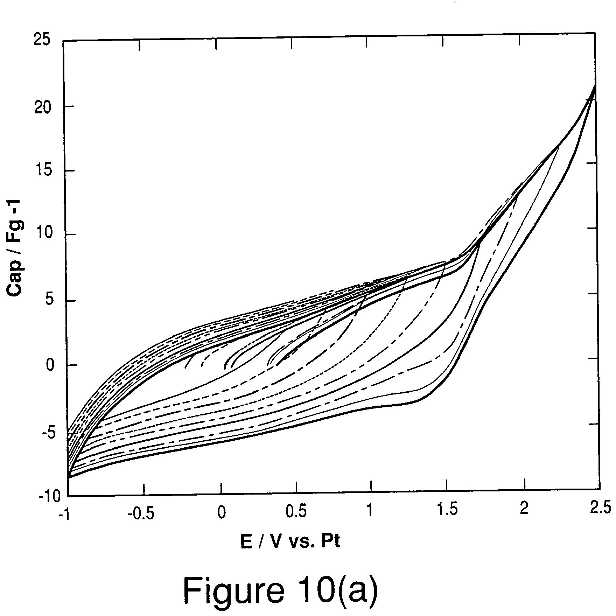

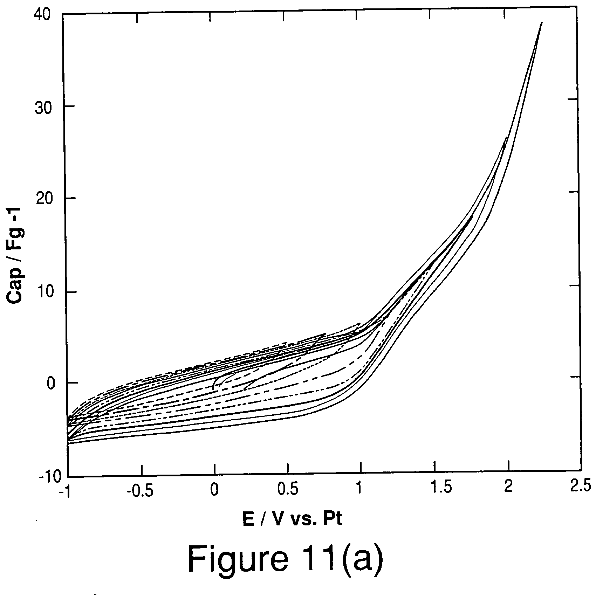

Figure 10(a) from Example 19 shows a cyclic voltammogram for a 0.026M solution of $[(CH3)4N]2[B12F12]$ in 1:1 EC/DMC where capacity (in Farads/gm of the active carbon electrode material) is plotted against voltage. From -1V to about 1.5V versus Pt there is a monotonic increase in capacity with a sharp up-turn at -1.5V. On the other hand, for the $[N(CH3)4][BF4]$ in 1:1 EC/DMC control there is only a monotonic increase in capacity to 2.5V (Figure 11(a)). The increase in capacity for the former is believed to be associated with the aforementioned redox reaction occurring at > about 1.5V:

$$[B_{12}F_{12}]^{2-} - e^- \leftrightarrow [B_{12}F_{12}]^-$$

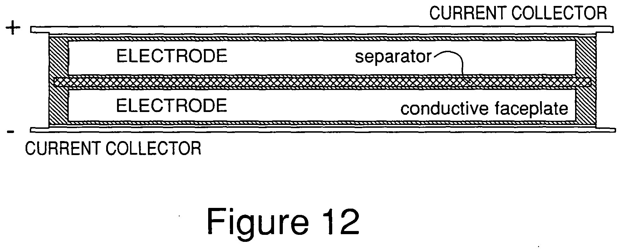

For these two examples, Examples 19 and 20, there was one porous carbon working electrode. A typical capacitor storage device comprises two symmetrical porous carbon electrodes that are separated by a thin porous separator which contains the electrolyte (e.g., see Fig. 12). As detailed in Example 21 such a device was constructed with the porous separator imbibed with a 0.2M solution of the test electrolyte $[N(C2H5)3CH3]2[B12F11.3H0.7]$ in 1:1 PC/DMC. A second or control device was made using the 1M $[N(C2H5)4][BF4]$ in 1:1 PC/DMC electrolyte. As shown in Tables 1 and 2 the test and control capacitors have similar capacities at 1V and 2V (e.g., at 2V the capacity was: 104F/g for the test vs. 118 F/g for the control).

In summary, at the 1V and 2V applied voltages the capacitor containing the inventive fluorododecaborate electrolyte functions at least comparably to the control; enhanced capacities and charge/discharge rates can be achievable with higher concentrations of the salt.

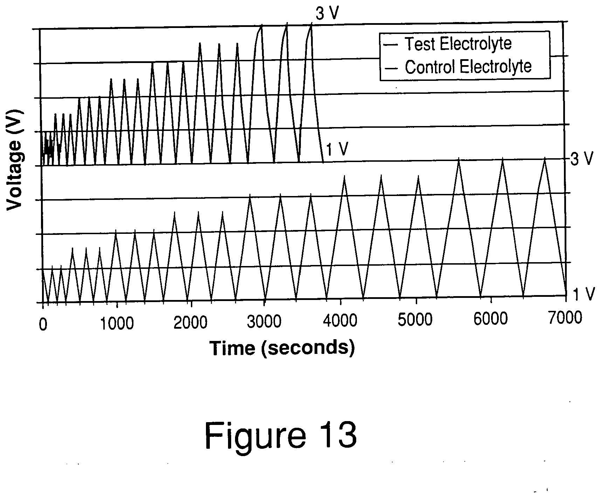

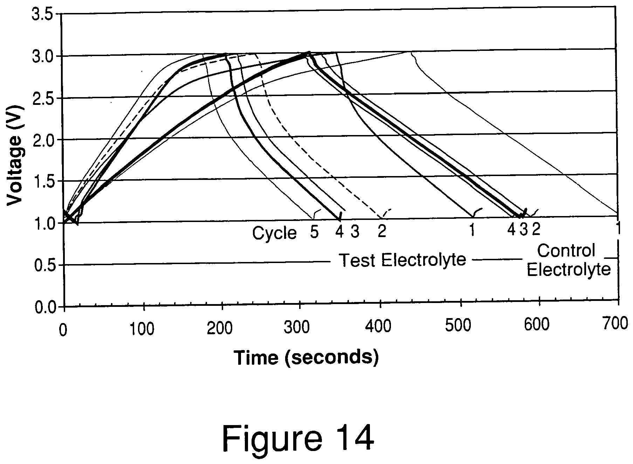

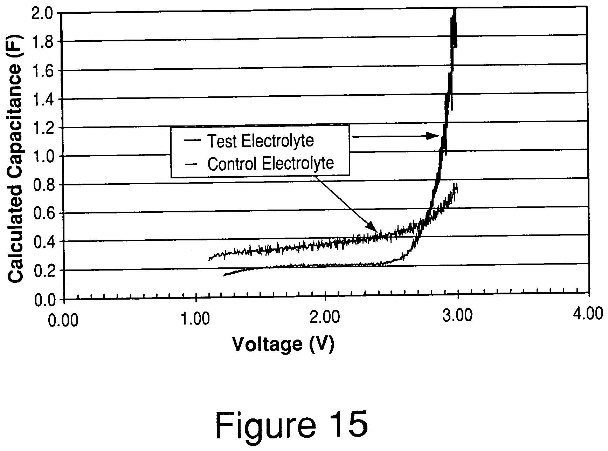

The ability of both test and control capacitors to cycle repeatedly at constant-current voltage is shown in Figure 13 and also in Fig. 14. In Figure 15, using the data for cycle 2 of Fig. 14, the charging capacitance was plotted as a function of voltage for the test electrolyte and control electrolyte containing capacitors. For the control electrolyte the capacitance increases monotonically with voltage. On the other hand, for the test cell the capacitance is almost constant to about 2.5V then rises abruptly. Without wishing to be bound by any theory or explanation, it is believed that the increased capacitance is theorized to result from a "Faradaic" electron or charge transfer process from the electrode to the dianion, i.e. the "pseudocapacitance".

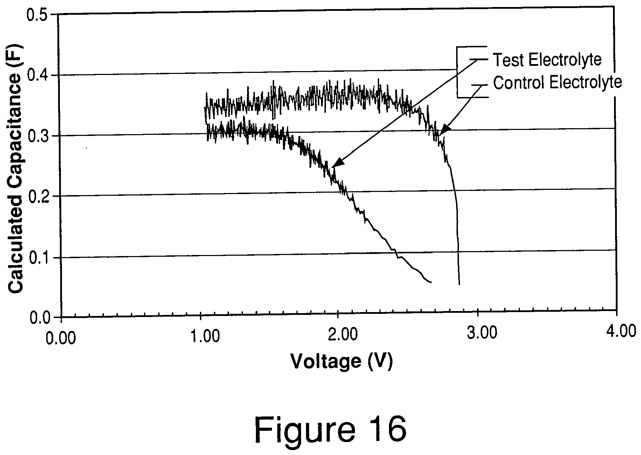

In Figure 16, the calculated (from cycle #2 of Fig. 14 data) discharge capacitance of the capacitor cells containing the test electrolyte and the control electrolyte were plotted as a function of voltage. An improved retention of charge may be achieved by employing a shorter time delay between charge and discharge cycles.

This redox phenomenon provides an unexpected opportunity to augment the energy storage of a double layer capacitor by operating at the higher voltage which encompasses the redox reaction i.e. up to about 5V vs Li/Li+. The greater energy storage comes from the higher potential but additionally from a Faradaic transfer of charge from the adsorbed fluoroborate anions to the electrode. Thus over the approximately 0.5V potential range one electron is transferred to and from the electrode surface per mole of $[B12F11.3H0.7]2-$.

The increased energy storage can be about 0.5V x 96,500 coulombs/mole or -40 kJ/mole. A double layer capacitor operating in this manner is an example of a "Faradaic process" electrochemical capacitor having the evident advantage of a potentially higher energy storage capacity.

There is an additional potential practical consequence of the redox phenomenon in capacitors. The steep rise in current (or capacitance) at more positive potentials, as seen in Figures 10(a), 11(a) and 15, suggests that the reversible redox system can provide a means of limiting or pinning the voltage (or charge) in a capacitor that is part of a bank of such capacitors that are connected in series. Such cell balancing of voltage and charge can eliminate the need for individual capacitor cell monitoring and control systems.

It should be noted that in the above description that the voltages in the Examples were measured against different references (e.g., in one case versus a quasi or "floating" Pt electrode, and in another versus a carbon electrode), and thus cannot all be quantitatively related.

Faradaic process may also occur at the negative electrode surface by utilizing a redox active cation, for example the europium 3+/2+ couple for which E° is at -0.36V versus H2/H+ or, the Sm3+/Sm2+ couple which is at -1.55V versus H2/H+ or the Pm3+/Pm2+ couple at -2.6V versus H2/H+ (or 0.44V vs Li+Li).

The following examples are provided to illustrate various embodiments of the invention as far as they fall under the scope of claim 1. As will be evident from these examples significant advantages can be achieved by using the HaMBQ•nH2O polyhedral fluoroborate and heterofluoroborate compositions in electrolytes for batteries, fuel cells, electrochemical supercapacitors, and other electrochemical devices and these advantages comprise:

In a battery (not falling under the scope of the present invention) an ability to use a lithium based salt for an electrolyte solution which has extraordinary chemical, thermal, and hydrolytic stability;
an ability to use a lithium-based electrolyte of optimal electrochemical stability;
an ability to use a lithium electrolyte solution which can be used at a low lithium based salt concentration, e.g., one-half the concentration of many other lithium based salts, e.g.,LiPF6;and,
an ability to form low viscosity, low-impedance lithium electrolyte solutions which can be recycled.

In a fuel cell (not falling under the scope of the present invention) an ability to use a proton conductor in liquid form having low volatility and low viscosity;
an ability to use a proton conductor having excellent affinity for water at elevated temperatures, e.g., 80 to 250°C and enabling fuel cell operation at the temperatures (150-250°C) of this range where the anode is less sensitive to CO poisoning.
an ability to use a proton conductor having excellent resistance to oxidation (by O2) and reduction (by H2) at operating temperatures;
an ability to use a proton conductor which adsorbs much less strongly than phosphoric acid at the platinum anode, enabling higher current densities to be obtained in a fuel cell; and
an ability to use a proton conductor which is a better solvent for oxygen than phosphoric acid, enabling higher current densities to be obtained; and,
an ability to use a proton conductor in a solid form, where it can also function as a separator between the cathode and anode of an electrochemical device.

In an electrochemical supercapacitor
an ability to use a salt for an electrolyte solution which has extraordinary chemical, thermal, and hydrolytic stability;
an ability to use a salt for an electrolyte solution of a wide electrochemical potential range enabling maximum energy storage.
an ability to further augment the storage capacity of the capacitor via a Faradaic transfer of charge due to a reversible $Q2- \leftrightarrow Q-+ e$ redox process that is a characteristic of the fluoroborate compositions of this invention.
an ability to limit the voltage of a capacitor in a bank of capacitors connected in a series.

Preparation of $Li_2B_{12}F_xH_{12-x}$, where x = 10-12

A colorless slurry containing 2.96 g (11.8 mmol) $K_2B_{12}H_{12}·CH_3OH$ in 6 ml formic acid at an average Hammett acidity of $H_o$ = -2 to -4 was fluorinated at 0 to 20°C. When 100% of the desired $F_2$ (142 mmol) was added as a mixture of $10\%F_2/10\%O_2/80\%N_2$, a colorless solution remained. Further fluorination (3%) at 30°C resulted in precipitation of solid from solution. Solvents were evacuated overnight, leaving 5.1 g of a colorless, friable solid. Analysis of this crude product by $^{19}$F NMR revealed primarily $B_{12}F_{10}H_2^{2-}$ (60%), $B_{12}F_{11}H^{2-}$ (35%), and $B_{12}F_{12}^{2-}$ (5%). The crude reaction product was dissolved in water and the pH of the solution adjusted to between 4-6 with triethylamine and triethylamine hydrochloride. The precipitated product was filtered, dried, and resuspended in water. Two equivalents of lithium hydroxide monohydrate were added to the slurry and the resulting triethylamine evacuated. Additional lithium hydroxide was added until the pH of the final solution remained at 9-10 after distillation of all triethylamine. Water was removed by distillation and the final product was vacuum-dried at 200°C for 4-8 hrs. Typical yields of $Li_2B_{12}F_xH_{12-x}(x=10,11,12)$ were ~ 75%.

Preparation of $[Et_3NH]_2B_{12}F_xH_{12-x}$ (x = 10, 11, or 12)

A slurry of 2.01 g $K_2B_{12}H_{12}·CH_3OH$ in 10 g glacial acetic acid was fluorinated at 20°C with $10\%F_2/10\%O_2/80\%N_2$. A total of 116 mmol $F_2$ was added (22% excess). The slurry remained colorless throughout the fluorination and while its viscosity, decreased; complete dissolution of the solid was never observed. At the completion of the fluorination the product, slurry gave a negative iodide test for oxidizer. Solvents were then evacuated and the crude product dissolved in water. Triethylammonium hydrochloride (240 mmol) was added along with enough triethylamine to bring the solution pH up to 5. The product was filtered, washed with water and dried. 3.2 g (65% yield) of fluoroborate salts were isolated. 19F NMR analysis showed $B_{12}F_{10}H_2^{2-}$(7%), $B_{12}F_{11}H^{2-}$ (18%), and $B_{12}F_{12}^{2-}$ (75%) with only traces of hydroxy-substituted impurities. The crude reaction product was dissolved in water and the pH of the solution adjusted to between 4-6 with triethylamine and triethylamine hydrochloride. The precipitated product was recrystallized, filtered and dried under vacuum at 100°C.

Fluorination of $K_2B_{12}H_{12}$ With Fluorine in Formic Acid (15% Loading; $O_2$ Added)

In this example, a colorless slurry containing 1.8 g (7.2 mmol) $K_2B_{12}H_{12} \cdot CH_3OH$ in 10 ml formic acid was fluorinated at 0 to 10°C as described in example 1. A total of 108 mmol $F_2$ (25% excess) was added as $10\%F_2/10\%O_2/80\%N_2$. Over the course of the fluorination solids completely dissolved leaving a colorless, homogeneous solution at the completion of the fluorination. Analysis of the crude product solution by $^{19}F$ NMR revealed primarily $B_{12}F_{11}H^{2-}$ (35%), and $B_{12}F_{12}^{2-}$ (60%) and approximately 5% of the monohydroxy impurity $B_{12}F_{11}OH$. No dimer impurity was observed. Isolation of the product through the triethylammonium salt as above removed impurities and gave the above fluorinated borate cluster products in 80% yield.

This example demonstrates preparation of $H_2B_{12}F_{12}$ x n $H_2O$ by direct fluorination of $H_2B_{12}H_{12}$ x n $H_2O$.

The fluorination of 2 weight % solution of $H_2B_{12}H_{12}$ x $6H_2O$ in HF at ~ -15°C with 20 % $F_2$ in $N_2$ afforded $B_{12}F_{12}^{2-}$ with a very low content of the other anions (side-products). Based on the $^{19}F$ NMR spectrum of the crude reaction mixture, the molar ratio of the anions were: $B_{12}F_{12}^{2-}$ (1), $B_{24}F_{22}^{4-}$(0.01), $B_{12}F_{11}(OH)^{2-}$ (0.05) and $BF_4^-$(0.36). Approximately 3 mol % of $B_{12}H_{12}^{2-}$ has to decompose during the reaction to produce the molar ratio of $BF_4^-$ to $B_{12}F_{12}^{2-}$ 0.36. Thus, the yield of $H_2B_{12}F_{12}$ x n $H_2O$ in the above reaction was close to 90 %.

This example demonstrates preparation of highly fluorinated hydroxy-substituted borate cluster salts. A colorless slurry containing ~ 4.0 g (17 mmol) of $K_2B_{12}H_{11}(OH)$ prepared by a standard literature method was dissolved in 15 ml formic acid and was treated with $10\%F_2/10\%O_2/80\%N_2$ (240 mmol $F_2$ total, 27% excess) at -10 to -5°C. Analysis of the crude product by $^{19}F$ NMR revealed primarily $B_{12}F_{11}(OH)^{2-}$ (55%), and $B_{12}F_{10}H(OH)^{2-}$ (35%) and approximately 5% of dihydroxy impurities.

This example demonstrates preparation of highly fluorinated hydroxy-substituted borate cluster salts. A colorless slurry containing 2.2 g (8.7 mmol) $K_2B_{12}H_{10}(OH)_2$, prepared by a standard literature method was dissolved in 8 ml formic acid and treated with $10\%F_2/10\%O_2/80\%N_2$ (114 mmol $F_2$ total, 30 % excess) at -10 to -5 °C. Analysis of the crude product by $^{19}F$ NMR revealed primarily $B_{12}F_{10}(OH)_2^{2-}$ (30%), and $B_{12}F_9H(OH)_2^{2-}$ (60%) and approximately 10% of trihydroxy impurities.

Preparation of $(H_3O)_2B_{12}F_xH_{12-x}$, x= 10, 11, or 12

The purpose of this example is to illustrate the preparation of the hydrated acid $(H_3O)_2B_{12}F_xH_{12-x}$.

A solid $Ba(OH)_2 8H_2O$(2.53g, 8.0 mmol) was added to a suspension of $[Et_3NH]_2[B_{12}F_{12}]$ (4.50 g, 8.0 mmol) in 50 ml of water, and triethylamine was distilled off under reduced pressure. As triethylamine was removed, an aqueous solution containing $BaB_{12}F_{12}$ was formed. This aqueous solution of $BaB_{12}F_{12}$ was treated with aqueous $H_2SO_4$, and $BaSO_4$ precipitate was removed by filtration. Water was distilled off from the filtrate, and the remaining solid was dried under vacuum at 190°C for two hours.

The solid was analyzed by gravimetric analysis. The solid (0.211 g) was dissolved in 10 ml of water and treated with $Ph_4PCl$. The white precipitate that formed was washed with water and dried at 120°C for 2 hours to collect 545.2 mg of $[Ph_4P]_2[B_{12}F_{12}]$ (for $H_2B_{12}F_{12} \cdot 2 H_2O$ the collected amount of $[Ph_4P]_2[B_{12}F_{12}]$ should be 550.5 mg, for $H_2B_{12}F_{12} \cdot 4 H_2O$ the collected amount of $[Ph_4P]_2[B_{12}F_{12}]$ should be 504.6 mg). According to the gravimetric analysis the composition of a solid acid was $H_2B_{12}F_{12}$ R'''$2H_2O$. The IR spectrum of the fluorolube mull of the solid acid contains a broad intense OH stretch at 3084 cm$^{-1}$, a lower intensity OH stretch at 3269 cm$^{-1}$, and an HOH band at 1610 cm$^{-1}$, all attributive to $(H_3O)^*$ cation.

It is anticipated that a similar treatment of barium or calcium fluoroheteroborate salts with sulfuric acid can be used to generate hydrated acids of the heteroborates, e.g., $H(R''''CB_{11}F_xZ_{(11-x)}) \cdot nH_2O$ and $H((R'R''R''')NB_{12}F_xZ_{(11-x)}) \cdot nH_2O$.

The above described acid also can be produced by a method which includes eluting a salt of the anion via an ion-exchange column in H$^+$ form and removing water under reduced pressure. However, in contrast to the procedure of this example, that method is time-consuming and requires evaporation of large amounts of water. It also results in contamination of the product acids with organic impurities.

Preparation of (R4N)2B12F11H, where R is butyl

In a typical preparation, 2.75 g (25 mmol) tetrabutyl ammonium bromide was added to a solution of 5 g (12

mmol) crude $K_2B_{12}F_{11}H$, prepared by the fluorination described in example 3. The resulting precipitate was filtered and washed with water and dried in a vacuum oven at 120°C. Typically > 5.5 g, ~ 95% yields were obtained.

Evaluation of Lithium-Based Electrolyte In Lithium Battery

In this example, a 2032 button cell battery configuration was used employing a lithium foil - electrode||0.4-0.5M $Li_2B_{12}F_{12}$ in EC/DMC|| $LiNi_{0.8}Co_{0.15}Al_{0.05}O_2$(+electrode). The cell was pulse charged and discharged using an Arbin Instruments BT4 series potentiostat to assess the area specific impedance (ASI) of the cell. Using this configuration, it was demonstrated that a 0.5 molar (M) solution of $Li_2B_{12}F_{12}$ in EC/DMC (3:7) allows equivalent or even slightly greater capacities than optimized electrolyte solutions employing 1.2 M $LiPF_6$ in the same cell configuration. More importantly in comparative tests it was seen that reducing the $Li_2B_{12}F_{12}$ concentration from 1 M to 0.5M reduces the ASI from $100\Omega/cm^2$ to $40\Omega/cm^2$ in this unoptimized solvent system. The target ASI value is ~ $35\Omega/cm^2$ at room temperature.

The highest electrolyte solution conductivity for $Li_2B_{12}F_{12}$ was observed at 0.4 M, and the conductivity at 0.3M was only slightly less than that at 0.5M. At a concentration of 0.4M in EC/DMC(3:7) the ASI remained at ~ $40\Omega cm^2$.

Determination of Stability of $(H_3O)_2B_{12}F_{12}$ Under Humid Air

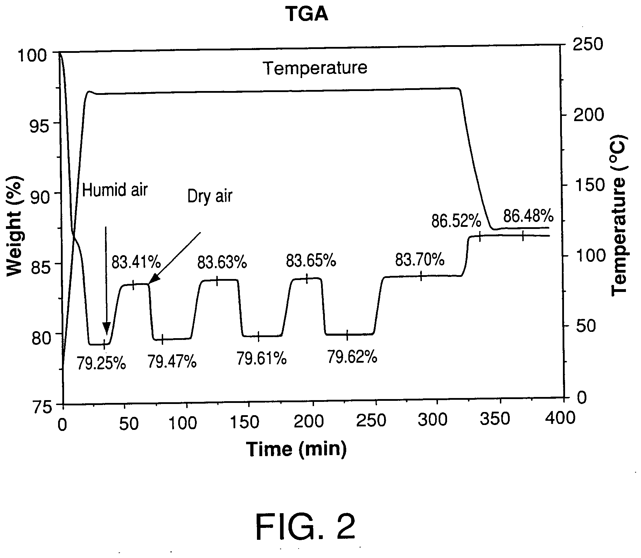

This purpose of this example is to determine if the acid, $(H_3O)_2B_{12}F_{12}$, is stable under humid air up to 250°C under inert atmosphere and whether the acid absorbs water at 250°C under low water vapor pressure (in this case only 24 torr), an important feature in fuel cells. The solid acid prepared as above was exposed to air for 18 hours. TGA of the acid was performed under dry air. To determine water adsorption at these conditions, the airflow was switched between the dry air and the humid air (air bubbled through water at - 25°C), Figures 2-4.

The results obtained upon heating from 25°C to 220°C under dry air atmosphere revealed that the solid lost 20.75 % of its weight, which corresponds to a transformation between $H_2B_{12}F_{12}\cdot8\ H_2O$ to $H_2B_{12}F_{12}\cdot2H_2O$. This composition was stable under inert atmosphere at 220°C, but its composition changed to $H_2B_{12}F_{12}\cdot3.1\ H_2O$ at 24 torr of water vapor pressure (- 0.1 % relative humidity). The acid was also stable at 250°C, and it adsorbed much less water at this temperature. At a temperature range from 120 to 200°C and at a water vapor pressure of 24 torr, the composition of the solid acid was $H_2B_{12}F_{12}\cdot4\ H_2O$. This solid composition did not show any weight loss when it was heated for ten hours at 200°C under humid air.

Summarizing, there was essentially no weight loss of the composition under the test conditions, thus illustrating its exceptional ability to retain water and there was no evidence of hydrolysis or decomposition.

Determination of the Stability of $H_2B_{12}F_{12}\cdot nH_2O$ Toward Hydrogen at High Temperatures

The purpose of this example is to determine the stability of $H_2B_{12}F_{12}\cdot nH_2O$ compositions toward hydrogen at high temperatures, an important feature in fuel cells. The acid $H_2B_{12}F_{12}\cdot2H_2O$, and a mixture of $H_2B_{12}F_{12}\cdot H_2O$ with 5% Pt on carbon (~5/1 mass ratio) were heated at 200°C for 14 days at 50 psig (at 25°C) of 100 % $H_2$ and 225 psig of water vapor pressure. The fluoroborate anion was stable according to the $^{19}$F and $^{11}$B NMR of the acid solutions. In summary, the acids such as $H_2B_{12}F_{12}\cdot n\ H_2O$ have shown a remarkable stability toward hydrogen at the temperatures up to 200°C. Solid acid proton conductors based on $CsHSO_4$ typically degrade under hydrogen atmosphere at these temperatures.

Determination of Conductivity of $H_2B_{12}F_{12}\cdot n\ H_2O$ in Water

The purpose of this example is to determine the conductivity of $H_2B_{12}F_{12}\cdot nH_2O$ as a liquid proton conductor from 20 to 200°C at water vapor pressures above 250 torr. The acid was placed into a glass cell, which was connected to a water reservoir through a heated tube. The system was placed under vacuum and the temperature of the water reservoir was varied to change the water vapor pressure in the system, which was also measured by the vacuum gauge. The acid was a liquid (n was equal to 8) at temperatures between 20 to 200°C and water vapor pressure above 250 torr. The conductivity of the liquid acid was determined using a two-pole CDC741T conductivity cell. The results are shown in Table 1.

Table 1.

| Conductivity of liquid $H_2B_{12}F_{12}\cdot n\ H_2O$ compositions at water vapor pressure 200 torr. | | |
|---|---|---|
| Temperature, °C | Relative Humidity, % | Conductivity, mS/cm |
| 120 | 14 | 355 |
| 152 | 5 | 307 |

(continued)

| Conductivity of liquid $H_2B_{12}F_{12} \cdot n\, H_2O$ compositions at water vapor pressure 200 torr. | | |
|---|---|---|
| Temperature, °C | Relative Humidity, % | Conductivity, mS/cm |
| 163 | 4 | 283 |

The results in Table 1 show that the composition retains water at low humidity with little reduction in conductivity. The test is relevant to proton transfer between electrodes of a fuel cell. A base of at least 100-150 mS/cm minimum is normally desired, and these compositions significantly exceed that conductivity level.

The acid $H_2B_{12}F_{12} \cdot nH_2O$ retains enough water to remain in a liquid phase up to 200°C at a water vapor pressure of only 250 torr. This property is dramatically different from the behavior of a similar chloroborate acid $H_2B_{12}Cl_{12} \cdot n\, H_2O$, which solidifies above 145°C and a water vapor pressure of 600 torr. The acid, $H_2B_{12}F_{12} \cdot nH_2O$, also showed a higher conductivity (350 mS/cm) at lower humidity level (water vapor pressure 200 torr), than the conductivity of $H_2B_{12}Cl_{12} \cdot n\, H_2O$ (239 mS/sm at water vapor pressure 600 torr).

Mixture of Fluoroborate Acid and Anhydrous Phosphoric Acid

The purpose of this example is to demonstrate that mixtures of fluoroborate acid and anhydrous phosphoric acid form melts, which have high proton conductivity even under inert atmosphere. Solid mixtures $(H_3O)_2B_{12}F_{12}$ / 2 $H_3PO_4$ (~ 67 weight % of $(H_3O)_2B_{12}F_{12}$), $(H_3O)_2B_{12}F_{12}$ / 4 $H_3PO_4$ (~50 weight % of $(H_3O)_2B_{12}F_{12}$), and $(H_3O)_2B_{12}F_{12}$/ 12 $H_3PO_4$ (~25 weight % of $(H_3O)_2B_{12}F_{12}$) were prepared under inert atmosphere. The mixtures were heated under inert atmosphere at 60 - 140°C and all formed clear solutions above 100°C. The 1:2 mixture melt crystallized at - 100°C. The conductivities of the melts under inert atmosphere are shown in Table 2.

Table 2.

| Conductivity of the phosphoric acid / fluoroborate acid melts at 100°C under inert atmosphere. | |
|---|---|
| Composition, molar ratio | Conductivity, mS/cm |
| 1 $(H_3O)_2B_{12}F_{12}$ /12 $H_3PO_4$ | 190 |
| 1$(H_3O)_2B_{12}F_{12}$ / 4 $H_3PO_4$ | 96 |
| 1 $(H_2B_{12}F_{12} \cdot 6H_2O$ / 4 $H_3PO_4$ | 179 |

The conductivity of the melts increases by the addition of small amounts of water.

High Thermal Stability of the Phosphoric Acid / Fluoroborate Acid Melts

The purpose of this example is to determine the thermal stability of phosphoric acid/fluoroborate acid melts. A mixture of $(H_3O)_2B_{12}F_{12}$/2 $H_3PO_4$ (~ 67 weight % of $(H_3O)_2B_{12}F_{12}$), was heated at 200°C for 20 hours under inert atmosphere. Only < 0.2 % of weight loss was observed and the anion was stable according to the $^{19}$F NMR of the acid solution.

Oxygen Reduction Kinetics of Aqueous Solutions of the Fluoroborate Acid Mixtures With Phosphoric Acid

The purpose of this example is to determine the oxygen reduction kinetics of aqueous solutions of the fluoroborate acid, and its mixtures with phosphoric acid.

Linear sweep voltammograms of aqueous acid solutions were recorded at 1400 rpm on a BAS rotating disc electrode apparatus with a CH Instruments Electrochemical Workstation potentiostat. The acid solutions were saturated with 1 atm of pure $O_2$ for at least 15 min before potential sweeps were made and $O_2$ purge was continued during the measurements. Several cyclic voltammetry scans were also applied between 1.0 and -0.2 V prior to collecting linear sweep data, to remove traces of electro-active impurities in the system. The working electrode was a Pt rotating disc electrode, which was polished, washed with distilled water, and dried before each new acid solution was measured. The reference was a Ag/AgCl electrode, and a Pt wire counter electrode was used.

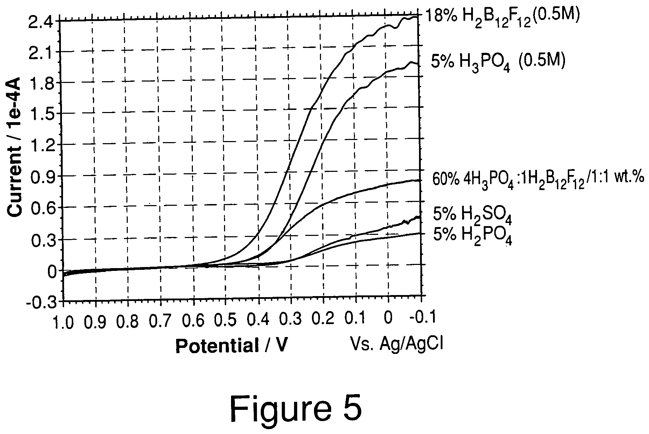

The graph, Figure 5, shows better oxygen reduction kinetics for the hydrated fluorododecaborate acids and its mixtures with phosphoric acid than aqueous solutions of a neat phosphoric acid and they also result in a higher current at the same potential. Strong anion-absorption is indicated by a shift in oxygen reduction to increasingly negative potentials. This overpotential is associated with the greater distance required for electron transfer through the thicker absorption layer interface and interference of reactant absorption at the electrode.

Linear sweep voltammetry scans of relatively dilute aqueous solutions of $H_2B_{12}F_{12}$ and $H_3PO_4$, show a +0.1 V shift in $O_2$ reduction potential for the former, *vis-à-vis* $H_3PO_4$ indicating that the $B_{12}F_{12}^{2-}$ anion is less adsorbing on the platinum catalyst than phosphoric acid even in relatively dilute solution. The effect is much larger for more concentrated solutions with the onset of $O_2$ reduction for both 60 % $H_3PO_{4(aq)}$ and 60% $H_2SO_{4(aq)}$ being almost 0.2 V lower than in a 60% aqueous solution of a 1:1(wt.%) $H_2B_{12}F_{12}$ and $H_3PO_4$ mixture. The limiting current was almost three times higher for a 60% aqueous solution of a 1:1(wt.%) $H_2B_{12}F_{12}$ and $H_3PO_4$ mixture compared with the limiting current of 60 % $H_3PO_{4(aq)}$ at the same potential, suggesting higher oxygen solubility in the solution containing the fluoroborate acid.

In summary, the solutions of fluoroborate acid proton conductors have better oxygen reduction kinetics on a platinum catalyst than solutions of neat phosphoric acid. The kinetics may result in fuel cells with higher power density. Also, the resulting mixtures show much less adsorption on the platinum electrode than does neat phosphoric acid.

Preparation of Proton Conductive Solid Membranes From Fluoroborate Acids

The purpose of this example is to demonstrate the preparation of proton conductive solid membranes from fluoroborate acids.

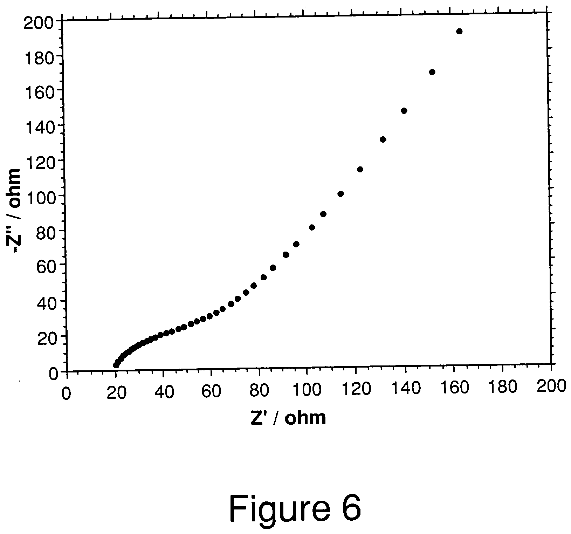

A glass fiber paper disk (-125 $\mu$m thickness, diameter - 10 mm, 5.5 mg) was soaked for 15 minutes in a 30 % solution of $(H_3O)_2B_{12}F_{12}$. When the disk was dried in the oven at 120°C for two hours, a membrane with thickness 550 $\mu$m and 49 mg weight (~90 wt % of the solid acid) was obtained. When a glass fiber disk was soaked in ~ 10 % solution of $(H_3O)_2B_{12}F_{12}$ and the disk was dried at 120°C for two hours, a membrane with thickness 225 $\mu$m and 18 mg weight was obtained. To measure the conductivity, the membranes, dried at 120°C for two hours, were pressed between the two gold disks, an alternating voltage (amplitude of 10 mV) in the frequency range 0.1 Hz to 0.1 MHz was applied to the membranes, and the complex impedance was measured Figure 6.

The membrane resistances were obtained by extrapolating the impedance data to the real axis on the high frequency side. The resistance of a 550 $\mu$m membrane was 30000 $\Omega$ at 27°C (conductivity is ~ 1.2 $\mu$S/cm), but the resistance at 182°C was three orders of magnitude lower 23 $\Omega$, (conductivity is ~ 1.6 mS/cm),

This example demonstrates the preparation of proton conductive solid membranes from fluorinated closo-heteroborate acids. A mixture of compounds $Cs(CB_{11}F_{11}H)$ (0.3g) and $[N(C_4H_5)_4][CB_{11}F_{11}H]$ (0.5g) was dissolved in 30 ml of a 1:1 mixture of methanol and acetonitrile. The combined mixture was eluted through a column packed with Amberlyst-15 cation exchange resin and the liquid fraction was collected in its acidic form. 10 ml of DI water was added to the column fraction and the solvents were removed from the elute under vacuum. The remaining acid was reconstituted to 5.0 ml in water. A glass fiber paper disk (~ 125 $\mu$m thickness, diameter - 20 mm, weight ~ 20 mg) was soaked in the solution of the fluorinated closo-heteroborate acid. After drying for two hours at 120 °C, a solid disk containing - 50 wt % of the acid and ~ 50 wt % of the glass fibers was obtained. A solid disk containing ~ 90 wt % of the acid was obtained when the glass fiber paper disk was soaked in more concentrated acid solution and dried at 120 °C for two hours.

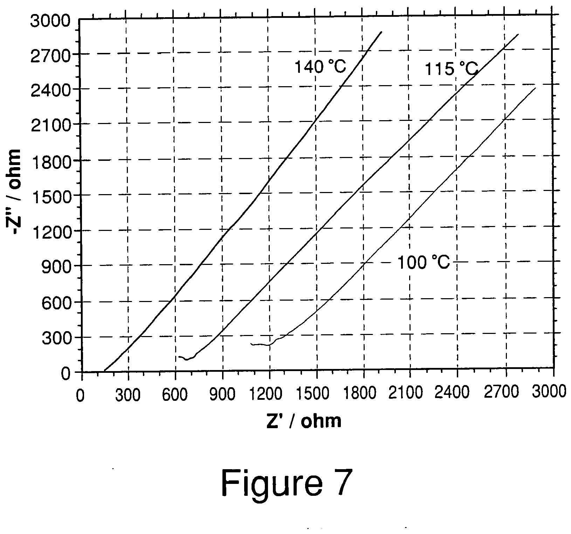

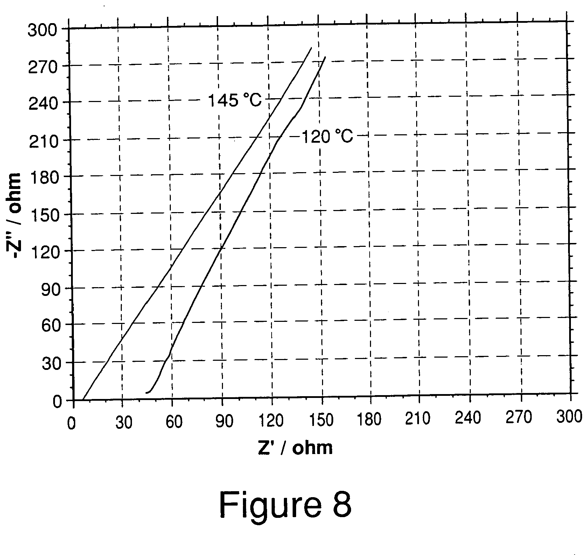

A glass fiber disks containing fluorinated heteroborate acid $HCB_{11}F_{11}H$ x n $H_2O$ were slightly pressed between two 15 x 0.5 mm stainless steel disks and dried for 24 h at 120 °C. The thickness of the solid membranes containing fluorinated heteroborate acid was 0.37 mm. The membrane assemblies were sealed into button cells. The cells were heated to various temperatures and the resistance of the membranes was determined by extrapolating the complex impedance data to the real axis on the high frequency side, Figures 7 and 8. Conductivities of the membrane composed of ~ 50/50 wt % of the glass fibers and fluorinated closo-heteroborate acid were: 0.5 $\mu$S/cm at 22 °C, 0.02 mS/cm at 100 °C, 0.04 mS/cm at 112 °C, and 0.1 mS/cm at 140 °C. Conductivity of the membrane composed of - 10/90 wt % of the glass fibers and fluorinated closo-heteroborate acid was about the same at RT, but it was much higher at elevated temperatures: 0.7 $\mu$S/cm at 22 °C, 0.47 mS/cm at 120 °C, and 3.5 mS/cm at 145 °C.

Electrochemical redox behavior of the tetraalkylammonium fluorododecaborate salt, [N(C4H5)4]2[B12F11H].

This example illustrates a cyclic voltammagram (CV) of the electrochemical redox properties of a solution of the title salt over a range of potentials. The same data is provided as a comparison for the prior art [N(C4H5)4][BF4] salt electrolyte.

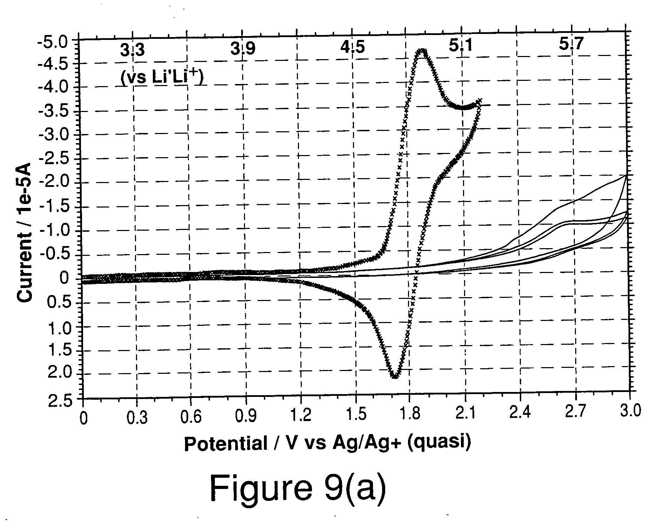

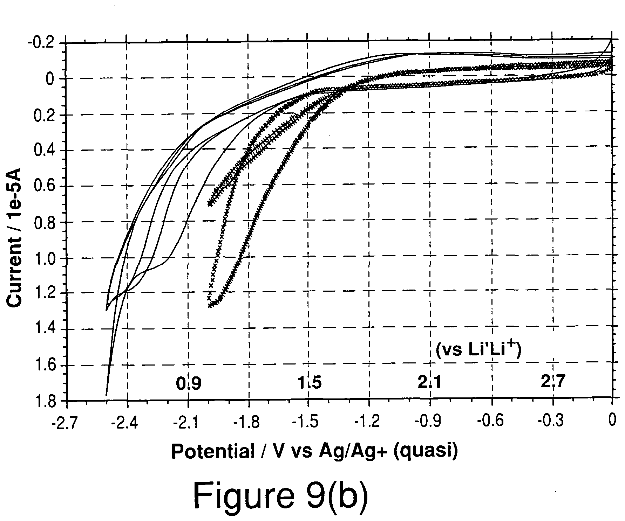

The preparation of the electrolyte salt was performed as described in Example 8. The supporting electrolyte was 0.1M [N(C4H5)4][BF4] in 3:7 ethylene carbonate:dimethylcarbonate (EC:DMC). To this supporting electrolyte 0.01M [N(C4H5)4]2[B12F11H] was added. Cyclic voltammograms (CV) were run using a glassy carbon working electrode (area = 0.07 cm2) at a scan rate of 50 mV/s. The counter electrode was platinum wire and the reference electrode was a Ag wire. Figure 9(a) shows the CV from 0 V to 3 V (vs. Ag wire). Figure 9(b) shows the CV from 0 V to -2.5 V (vs. Ag wire). The potential window ranges from -1.2 V to approximately 1.5V for double layer charging without faradaic reactions. The region between 1.5 V and 2 V comprises the faradaic oxidation and reduction of the [N(C4H5)4]2[B12F11H] salt.

Example 19

Evaluation of the tetramethylammonium fluoroborate based electrolyte, [N(CH3)4]2[B12F11H] in an electrochemical supercapacitor.

The purpose of this example is to demonstrate the use of the tetramethylammonium fluorododecaborate salt, [N(CH3)4][B12F11H] in an electrochemical supercapacitor device. The laboratory test device consisted of an electrochemical cell with three closely spaced electrodes: 1. A working electrode consisting of a porous carbon film on a porous aluminum metal grid, 2. A Pt wire counterelectrode and 3. A Pt quasi-reference electrode. The porous carbon film was prepared by depositing a slurry of 77% active carbon, 8.5% carbon SP and 14.5% polyvinylidine fluoride and dibutylphthalate (DBP) in acetone onto an aluminum grid. The acetone was evaporated, following which porosity was achieved by dissolving out the DBP once the film was formed. The film was washed in ether in an ultrasonic bath to extract out the DBP thus creating the required porosity in the film. The film contained ca. 3.4-5.4 mg of carbon. Cyclic voltammagrams were taken at several scan rates and potential windows using a Parr EG8263A patentiostat. The capacity C at a given potential was calculated as

$$C = current\ (I)/scan\ rate\ (volts\ sec^{-1})\ mass\ (g)$$

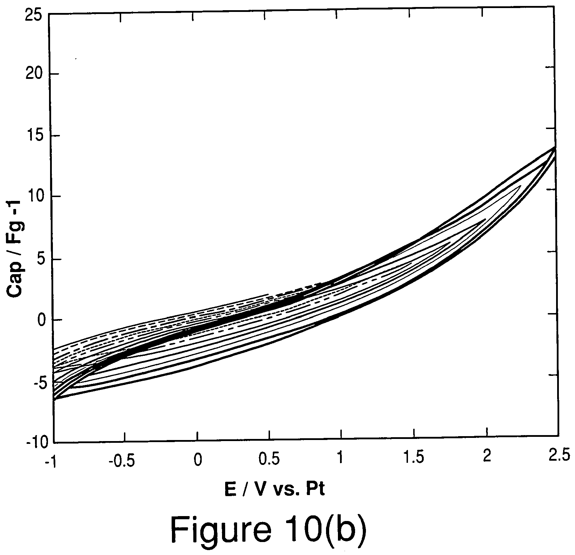

Figure 10(a) shows a plot of capacitance as a function of potential for 0.026M [N(CH3)4]2[B12F12] in a 1:1 ethylene carbonate (EC)/dimethylcarbonate (DMC) solvent. The corresponding data for a 0.039M solution of the prior art control electrolyte, [N(CH3)4][BF4] is provided in Figure 10(b).

The control electrolyte shows an approximately linear increase in capacity from -1 to 2.5 volts (Fig. 10(b). On the other hand [N(CH4)4][B12F12], the electrolyte of the present invention shows a relatively sharp upturn in capacity at 1.5V vs. Pt. As described above, it is believed that this is due to an oxidation of the dianion [B12F12]2-to the [B12F12]-monoanion above this potential as evidenced by the cyclic voltammogram (CV) for the closely related [N(n-But)4]2[B12F11H] salt shown in Example 18.

Example 20

Evaluation of the triethylmethylammonium fluorododecaborate based electrolyte, [N(C2H5)3CH3]2[B12F11.3H0.7] in an electrochemical supercapacitor.

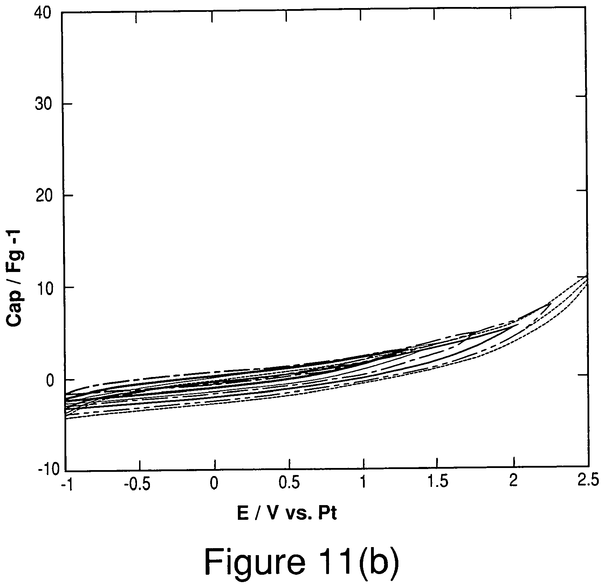

The test device comprising a porous carbon working electrode ($\sim$3.4 mg carbon), with Pt counter and reference electrodes as described in Example 19 was employed to evaluate a 0.06M solution of [N(C2H5)3CH3]2[B12F11.3H0.7] in 1:1 EC/DMC, in comparison with a 0.09M solution of the [N(C2H5)4][BF4] control electrolyte in the same mixture of solvents. Capacity data for cells utilizing the two electrolytes is presented in Figures 11(a) and 11(b) respectively.

The control (Fig. 11(b)) shows a monotonic increase between -1 and 2.5V vs Pt, while the test system shows a significant rise in capacity above 1V. The effect is more marked than for the [N(CH3)4]2[B12F12] salt owing at least in part to the now higher concentration (0.6M vs 0.026M) of the redox-active fluorododecoborate anion.

Example 21

Properties and Performance of Electrochemical Capacitor Devices

1. MATERIALS and PREPARATION

Symmetric capacitor test cells were fabricated using a 0.2M triethylmethyammonium fluorododecaborate, [N(C2H5)3CH3]2[B12F11.3H0.7] salt electrolyte in 1:1 PC/DMC electrolyte and activated carbon electrodes. The electrodes were made of a high performance activated carbon developed for the electrochemical capacitor industry containing a Teflon® binder. Similar capacitor test cells were fabricated using the same type of electrodes with a control electrolyte consisting of an equal volume mixture of propylene carbonate (PC) and dimethylcarbonate (DMC) containing 1.0 M tetraethylammoniumtetrafluoroborate (TEATFB) salt. The electrodes were dried under vacuum at 195 C for 15 hours before being transferred to a drybox, while still under vacuum, for assembly of the capacitor test cells. Separators were dried overnight at 55 oC before being transferred to the drybox.

2. TEST CAPACITORS

The electrode discs were soaked with the appropriate organic electrolyte for 10 minutes then assembled into cells using a 0.001" thick microporous separator, thermoplastic edge seal material, and conductive face-plates (Figure 12). The perimeter edge sealing was performed using an impulse heat sealer that minimized heat input into the cells. The conductive faceplates were aluminum metal with a surface treatment to prevent oxidation (as conventionally used in the lithium-ion battery industry). The thermoplastic edge seal material was selected for electrolyte compatibility and low moisture permeability and applied using an impulse heat sealer located directly within the drybox. Once the cells were thermosealed, they were removed from the drybox and metal plates were clamped against each conductive faceplate and used as current collectors.

Capacitor cells were conditioned at 1.0 V for ten minutes, measured for properties, then conditioned at 2.0 V for 10 minutes and measured for properties.

## 3. TEST MEASUREMENTS

All measurements were performed at room temperature. The test capacitors were conditioned at 1.0 V then shorted and the following measurements were made: with a 1 kHz series resistance, charging capacitance at 1.0 V with a 500 ohm series resistance using a capacitance test box, and leakage current at 1.0 V hold at 1V then follow change after 30 minutes using a leakage current apparatus. Following this the test capacitors were conditioned at 2.0 V then shorted and the following measurements were made: 1 kHz equivalent series resistance (ESR), charging capacitance at 2.0 V with a 500 ohm series resistance, leakage current at 1.5 and 2.0 V after 30 minutes using the leakage current apparatus, and electrochemical impedance spectroscopy (EIS) measurements at 2.0 V bias voltage then charge/discharge measurements were made using an Arbin potentionstat. Finally, the cells were measured using EIS at 2.0 V bias to check for changes occurring during the testing.

## 4. RESULTS

### A. Performance Evaluation of Capacitors at 1.0V and 2.0V

Tables I and II below list test data for capacitors fabricated with the specified test and control electrolytes. Two test cells of each type were fabricated and tested with very similar results. One cell of each type was selected for additional testing and the results for those cells are reported here. Series resistance values (ESR) reported in the tables were measured at 1 kHz.

Table 1.

| Test results for measurements at 1.0V of prototype capacitors constructed with the test electrolyte [N(C2H5)3CH3] 2[B12F11.3H0.7] and a control test cell made with [N(C2H-5)4][BF4] in PC/DMC. The mass reported for the electrodes was taken from previous measurements of these types of electrode discs and includes the mass of the Teflon binder. | | | | | |
|---|---|---|---|---|---|
| ID | dry mass of 2 electrodes (mg) | density (g/cc) | 1kHz Series Resistance ($\Omega$) | C500 (F) @ 1.0V | 30 min leakage current ($\mu$A) 1.0V |
| Test Electrolyte | 9.8 | 0.49 | 2.014 | 0.22 | 1.3 |
| Control Electrolyte | 9.8 | 0.49 | 1.078 | 0.24 | 3.6 |
| C500 - 500 $\Omega$ charging capacitance | | | | | |

Table 2.

| Test results for measurements at 2.0 V of prototype capacitors constructed with the test electrolyte [N(C$_2$H$_5$)$_3$CH$_3$]$_2$ [B$_{12}$F$_{11.7}$H$_{0.7}$] and a Control test cell made with [N(C$_2$H$_5$)$_4$][BF$_4$] in PC/DMC. | | | | | | |
|---|---|---|---|---|---|---|
| ID | 1kHz Series Resistance ($\Omega$) | C500 (F) @2.0V | 30 min leakage current ($\mu$A) 1.5V | 2.0V | F/g @2.0V | F/cc @2.0V |
| Test Electrolyte | 2.317 | 0.26 | 4.4 | 32 | 104 | 51 |

(continued)

| Test results for measurements at 2.0 V of prototype capacitors constructed with the test electrolyte $[N(C_2H_5)_3CH_3]_2$ $[B_{12}F_{11.7}H_{0.7}]$ and a Control test cell made with $[N(C_2H_5)_4][BF_4]$ in PC/DMC. | | | | | | |
|---|---|---|---|---|---|---|
| ID | 1kHz Series Resistance ($\Omega$) | C500 (F) @2.0V | 30 min leakage current ($\mu$A) | | F/g @2.0V | F/cc @2.0V |
| | | | 1.5V | 2.0V | | |
| Control Electrolyte | 1.106 | 0.29 | 9.8 | 50 | 118 | 58 |
| C500 - 500 $\Omega$ charging capacitance | | | | | | |

B. Performance Evaluation of Capacitors from 1.0V to 3.0V

Charge/discharge cycling measurements were made five days after the cells were constructed. By this time the series resistance values of the cells had increased. Still the cycling can reveal useful information about the cells. Figure 13 shows some of the results of these constant current charge/discharge cycling measurements. Three sets of measurements were made on each cell. The first time both cells had one cycle with a maximum of 3.0 V. The second time the test cell had one cycle with a maximum of 3.0 V while the maximum voltage seen by the control cell was 2.0 V. The third time both cells had three cycles with a maximum voltage of 3.0 V, as shown in Figure 13. The cells underwent six sets of three cycles from 1.0 V and increasing upper voltage limits. The longer duration for the control cell is due to its higher capacitance.

Figure 14 shows the sequence of cycling to 3.0 V cycles for each test cell. The time difference between the first and last cycle is about two hours and the last three cycles were performed without any delays between them except the 5 seconds of open circuit at the voltage maxima and minima. The discharge slopes of the curves illustrated in Fig 14 are similar, but the charging curves show considerable change.

Since in the constant current cycling measurements as shown in Fig. 14 major changes occurred between the first and second 3-V charge cycle for each with generally stable behavior thereafter, cycle #2 of each will be considered. Charging capacitance is proportional the reciprocal of the positive slope regions of the curves in Figure 14, with a proportionally constant equal to the charging current io = 2.5 mA. The calculated charging capacitance for the second cycle of each test cell is shown in Figure 15. Note that the capacitance value of the control cell is larger at 2 V than the test cell, consistent with behavior previously listed in Table I. The control cell shows a general monotonic increase in capacitance with voltage up to 3.0 V, almost doubling in value over this entire 2-V region. In contrast, the test cell shows very constant capacitance at 2.5 V and below, then a 10-fold increase in capacitance between 2.5 and 3.0 V, the majority of this increase occurring above 2.7 V. In summary, the two test cells show markedly different constant-current charging behavior above -2.6 V, Without wishing to be bound by any theory or explanation, it is believed that this increase in capacitance is due to the onset at above about 2.7V the redox reaction:

$$[B12F11.3H0.7]2- \leftrightarrow [B12F11.3H0.7]-+e-$$

as shown by the CV in Figure 9(a) for the closely related [N(C4H5)4]2[B12F11H] salt.

From the second constant current cycle of Figure 14 the capacitance upon discharge of the two capacitor cells was calculated. This is shown in Figure 16.

Synthesis of $M_2B_{12}F_{12-x}(OCH_2CF_3)_x(x = 0 - 3)$

In a drybox, Na2B12H12 (4.02 g, 21.1 mmol) and CF3CH2OH (15 mL, 208 mmol) were transferred into a 1" FEP vessel equipped with stainless steel fittings, a thermocouple and a PTFE coated magnetic stir bar. The vessel was attached to a metal vacuum manifold in series with an FEP U-trap, and the reaction was initiated by the replacement of the nitrogen head with 900 to 1100 Torr of BF3. The evolved hydrogen was periodically measured and removed by means of the vacuum manifold, and the reaction was deemed complete when the rate of hydrogen evolution became negligible over a 4 to 8 hour period. Heating of the solution towards the end of the reaction was deemed unnecessary due to the retention of efficient stirring. The product was isolated as a free-flowing yellow powder by removal of the solvent and BF3 under dynamic vacuum, first at ambient temperature and then at 45 oC. The highly hygroscopic product (8.1 g) was handled and stored in a drybox.

The crude Na2B12H12-x(TFE)x was weighed into a 1" FEP vessel equipped with stainless steel fittings, a thermocouple and a ¼" FEP dip tube. The vessel had inlet and outlet valves, such that HF, N2 and F2 could be transferred into the vessel by means of flow methods. Approximately 70 mL of pre-cooled (-78oC) anhydrous HF was transferred into the vessel, and the reactor contents were allowed to equilibrate in a dryice/acetone bath (-15 to -30 oC) while being purged with dry N2 (60 mL/min) to eliminate any H2 generated by preliminary fluorination of the precursor by HF. Direct fluorination of the salt was accomplished by bubbling F2/N2 (20:80) through the solution at rates between 20 to 100 mL/min. The fluorination was continued until 20 to 30 mole equivalents of F2 per mole of Na2B12H12-x(TFE)x had been passed though the vessel. Toward the end of the reaction, the solution took on an intense purple color, suggesting the presence of the B12H12-x(TFE)x-• (x = 0 - 3) radical anions. The crude fluorinated product was isolated by purging the solution with N2, and then removing the solvent under dynamic vacuum. Complete conversion of the cluster's B-H bonds to B-F bonds were confirmed by a combination of mass spectrometry (Table A) and multi-NMR (1H, 19F, 11B) spectroscopy (Table B).

The crude Na2B12F12-x(OCH2CF3)x (ca 2.6g, 4.6 mmol) was dissolved water and treated with KOH(aq) to pH = 14. The insoluble impurities were removed by filtration and the filtrate was neutralized with dilute H2SO4. The neutralized filtrate was treated with 4.1g of triehthylammonium chloride (TEA+Cl-) and reduced in volume to precipitate [TEA]2[B12F12-x(OCH2CF3)x]. The pale orange TEA salt was recrystallized from boiling water and collected by filtration. The tacky TEA+ salt was added to water and treated with LiOH•H2O to pH = 14. Triethylamine and water were removed on a rotavap, and the excess LiOH was neutralized with dilute H2SO4 in water. The product, which contained Li2SO4, was dried under dynamic vacuum at ambient temperature overnight.

Alkali metal salts of B12F12-x(OCH2CF3)x2- may alternatively be prepared by passage of [TEA]2[B12F12-x(OCH2CF3)x] through an amberlyst acid exchange column in methanol solvent to yield the acid intermediate, H2B12F12-x(OCH2CF3)x, which is neutralized with the appropriate alkali metal hydroxide. Alkyl- or phenyl-ammonium salts of B12F12-x(OCH2CF3)x2- are readily precipitated from aqueous solutions of the alkali or acid forms of the salt by addition of an appropriate alkyl- or phenyl-ammonium halide.

Synthesis of $M_2B_{12}H_{12-x}(OCH_3)_x$

Approximately 50 g of acid-form amberlyst exchange resin was repeatedly washed HPLC grade methanol until discoloration of the solvent ceased, and then vacuum dried. The dry resin was rinsed with anhydrous methanol in a drybox to further minimize its water content. The methanol was decanted off, and a fresh aliquot of anhydrous methanol (100 mL) was added to the resin followed by dry K2B12H12 (15 g, 68 mmol) and a PTFE coated magnetic stir bar. This mixture was stirred for 5 hr to generate a methanol solution of H2B12H12, which was filtered in a glovebag and collected in a 500 mL 3-neck round bottom flask. The flask was sealed with a rubber septum, a glass plug, and a condenser in series with a Krytox® bubbler. The volume of the solution was reduced to 250 mL by purging the flask with dry N2 through the septum and out the bubbler. The solution was heated to 90oC using an oil bath with a continuous slow N2 purge to prevent high concentrations of H2 from accumulating in the flask. Samples of the solution were periodically drawn, neutralized with KOH(aq), evaporated to dryness and submitted for analysis in D20 by 11B NMR spectroscopy to quantify the reaction progress. (Note: The samples were neutralized in order to observe the characteristic 1:5:5:1 spectrum of B12H110CH32- because D ↔ H exchange can occur between H2B12H12-x(OR)x and D2O). Additional solvent was periodically added to the reaction mixture to maintain a net volume of ca 250 mL, and the reaction was continued until the point that the quantity of B12H122- precursor was ≤1 mol% and evolution of B12H12-x(OCH3)x2- (x > 1) was minimal (≤12 mol%). The methanolic H2B12H11(OCH3) solution was cooled, diluted with water and neutralized with hydroxide (KOH, NaOH, etc.) to yield the desired alkali metal B12H11(OCH3)2- salts, from which the solvent mixture was removed on a rotavap. Under the conditions described, the percentage of B12H122- in the sample diminishes approximately according to following eq 1, where a = 99.1, b = 0.954 and t is the heating period (hrs). The

$$B_{12}H_{12}{}^{2-}(mol\%) = ab^t \qquad\qquad (eq\ 1)$$

In another synethsis example, a similar scaled reaction was concentrated to ca 75 mL and heated to 95°C, the product distribution was determined to be 40% $B_{12}H_{11}(OCH_3)^{2-}$, 51% $B_{12}H_{10}(OCH_3)_2{}^{2-}$ and 9% $B_{12}H_9(OCH_3)_3{}^{2-}$ after only 47 hrs of heating.

In a drybox, vacuum dried Na2B12H11(OCH3) (4.90 g, 22.5 mmol) was weighed into a 1" FEP vessel similar to that described for the synthesis of M2B12F12-x(OCH2CF3)x. The potassium salt of B12H11(OCH3)2- may also be used, however, it and its products are normally less soluble in aHF than Na2B12H11(OCH3). Approximately 70 mL of pre-cooled (-78oC) aHF was transferred into the vessel, and the reactor contents were allowed to equilibrate in a dryice/acetone bath (-15 to -30oC) while being purged with dry N2 (60 mL/min) to eliminate any H2 generated by preliminary fluorination of the precursor by HF. Direct fluorination of the salt was accomplished by bubbling F2/N2 (20:80) through the solution at rates between 20 to 100 mL/min. When the mole ratio of F2:Na2B12H11(CH3) reached ca 15:1, the HF solvent was removed and the dry salt was ground to a fine powder in a drybox using a mortar and pestle. The solid was transferred back into reaction vessel and the fluorination procedure was repeated until an additional 10:1 molar ratio of F2:Na2B12H11(OCH3) had been bubbled through the solution. The crude fluorinated product was isolated by purging the solution with N2, and then removing the HF under dynamic vacuum. Complete conversion of the cluster's B-H bonds to B-F bonds was confirmed by a combination of mass spectrometry (Table A) and multi-NMR (1H, 19F, 11B, 13C) spectroscopy (Table B).

The crude salt (16.0 g) was dissolved in CH3CN, stirred for 30 minutes, and filtered to remove the insoluble impurities. The orange CH3CN solution was then passed through a column containing 25 g of neutral alumina, stirred with 10 g of basic alumina and then filtered. Acetonitrile solvent was removed under dynamic vacuum and the remaining solid was dissolved in CH3OH and passed through an amberlyst acid exchange column to generate the acid form of the salt, H2B12F11(OCH3). Neutralization of H2B12F11(OCH3) by titration with aqueous alkali metal hydroxides yielded alkali metal salts of B12F11(OCH3)2-. Rotary evaporation was used to remove the majority of the solvent mixture, before drying the salt at 160oC under dynamic vacuum. Alkyl- or phenyl-ammonium salts of B12F11(OCH3)2- are readily precipitated from aqueous solutions of M2B12F11(OCH3) (M = H, alkali) by the addition of an appropriate alkyl- or phenyl-ammonium halide.

Table A.

| Characteristic Ion Masses (m/e) Identified for $NB_2B_{12}H_{12-x}(OR_F)_x$ and $Na_2B_{12}F_{12-x}(OR_F)_x$ Salts[a] | | | | |
|---|---|---|---|---|
| | $Na_2B_{12}H_{12-x}(TFE)_x$ | $Na_2B_{12}F_{12-x}(TFE)_x$ | $K_2B_{12}H_{12-x}(OCH_3)_x$ | $Na_2B_{12}F_{12-x}(OCH_3)_x$ |
| $B_{12}L_{11}(OR)^{2-}$ | | 218.07 | 86.20 | 185.04 |
| $B_{12}L_{10}(OR)_2^{2-}$ | 169.12 | 258.57 | | |
| $B_{12}L_9(OR)_3^{2-}$ | 218.11 | 299.06 | | |
| $B_{12}L_8(OR)_4^{2-}$ | | | | |
| $B_{12}L_7(OR)_5^{2-}$ | | | | |
| $MB_{12}L_{11}(OR)^-$ | | 459.14 | 211.20 | 393.12 |
| $MB_{12}L_{10}(OR)_2^-$ | 361.21 | 540.11 | | |
| $MB_{12}L_9(OR)_3^-$ | 458.26 | | | |
| [a]Ions produced by flow injection of $H_2O/CH_3CN$ solutions. Isotopic distributions of $^{11,10}B_{12}$ were observed, however, only the most intense isotopemer for each species (i.e., the $^{10}B_6^{11}B_6$ combination) is reported. | | | | |

Table B.

| NMR Chemical Shifts Assignments for $Na_2B_{12}H_{12-x}(TFE)_x$, $Na_2B_{12}F_{12-x}(TFE)_x$, $Na_2B_{12}H_{11}(OCH_3)$ and $Na_2B_{12}F_{11}(OCH_3)$.[a] | | | | |
|---|---|---|---|---|
| Species | 1H | 19F | 11B | 13C |
| $Na_2B_{12}H_{12-x}TFE)_x$ (in $H_2O$) | 0.50 to 2.0: B-H<br>3.5 to 4.0: $-OCH_2CF_3$[b] | -75.7 to -74.4: $-OCH_2CF_3$[c] | -30 to 10: B-H[d] | |
| $Na_2B_{12}F_{12-x}(TFE)$ (in $H_2O$) | 3.90: $OCH_2CF_3$[e] | -267.6: B-F<br>-259.7: B-F<br>-255.1: B-F<br>-249.0: B-F<br>-77.0 to -75.7: $-OCH_2CF_3$ | -30 to 10: B-O/F[1] | |
| $Na_2B_{12}H_{11}(OCH_3)$ | 0.2 to 1.9: B-H<br>3.20: $-OCH_3$ | | -22.96: B-H<br>-17.94: $BH_5$'<br>-16.22: $BH_5$<br>7.04: $B-OCH_3$[g] | 56: $-OCH_3$ |

(continued)

| NMR Chemical Shifts Assignments for Na$_2$B$_{12}$H$_{12-x}$(TFE)$_x$, Na$_2$B$_{12}$F$_{12-x}$(TFE)$_x$, Na$_2$B$_{12}$H$_{11}$(OCH$_3$) and Na$_2$B$_{12}$F$_{11}$ (OCH$_3$).[a] | | | | |
|---|---|---|---|---|
| Species | $^1$H | $^{19}$F | $^{11}$B | $^{13}$C |
| Na$_2$B$_{12}$F$_{12-x}$(OCH$_3$) (in H$_2$O) | 3.56: -OCH$_3$ | -269.9: B-F<br>-269.3: B-F<br>-268.7: B-F<br>-267.9: B-F<br>-266.5: B-F | -7.50: B-F<br>20.93: B-O | 57: -OCH$_3$ |
| [a]Referenced to Si(CH$_3$)$_4$, CF$_3$Cl and BF$_3$·Et$_2$O. [b]Water observed at 4.67 ppm. [c]Residual CF$_3$CH$_2$OH observed at -77.1 ppm. [d]Residual BF$_4$$^-$ and B(OH)$_3$ observed at -1.10 and 19.86 ppm, respectively. [e]Residual HF and H$_2$O observed at 4.21 and 4.66 ppm, respectively. [f]Residual BF$_4$$^-$ and B(OH)$_3$ observed at -1.14 and 19.42, respectively. [g]salts of B$_{12}$H$_{12}$$^{2-}$ and B$_{12}$H$_{10}$(OCH$_3$)$^{2-}$ are observed at -15.05 and 4.59 ppm, respectively. | | | | |

Figure 1:   Structures of the fluorinated closo-dodecaborate (i), *closo*-ammonioborate (ii), and c/oso-monocarborate (iii). Note, that fluorine atoms (F) can be substituted with other groups (Z), which include hydride, other halogens, hydroxyl or alkoxy groups, as described in the text of the patent.

Figure 2:   Thermogravimetric analysis (TGA) of H$_2$B$_{12}$F$_{12}$ · n H$_2$O at 220°C under dry and humidified airflow.

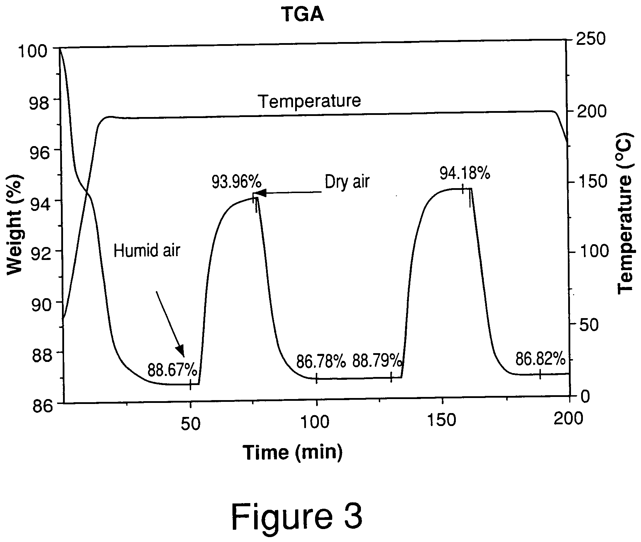

Figure 3:   Thermogravimetric analysis (TGA) of H$_2$B$_{12}$F$_{12}$ · n H$_2$O at 200°C under dry and humidified air flow.

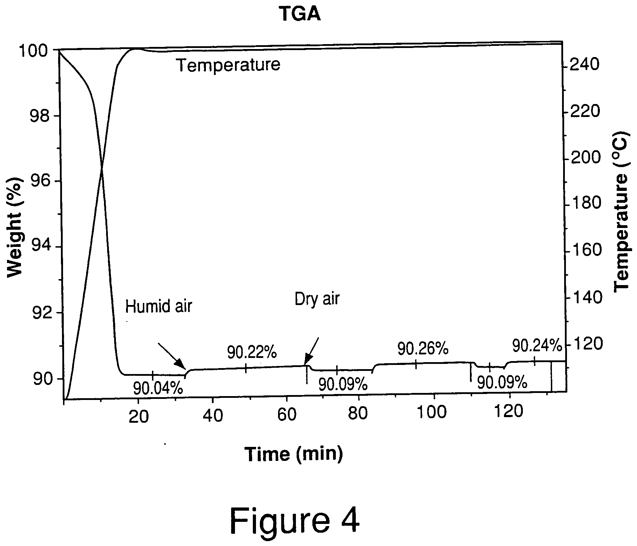

Figure 4:   Thermogravimetric analysis (TGA) of H$_2$B$_{12}$F$_{12}$ · n H$_2$O at 250°C under dry and humidified air flow.

Figure 5:   Rotating disc electrode (RDE) Linear sweep voltammograms of aqueous acids at 1400 RPM.

Figure 6:   Impedance plot of the glass fiber/fluoroborate acid membrane assembly at 182°C.

Figure 7:   Impedance plots of the assembly containing a membrane composed of ∼ 50 wt % glass fiber and ∼ 50 wt % fluorinated heteroborate acid (HCB$_{11}$F$_{11}$H x n H$_2$O).

Figure 8:   Impedance plots of the assembly containing a membrane composed of ∼ 10 wt % glass fiber and ∼ 90 wt % fluorinated heteroborate acid (HCB$_{11}$F$_{11}$H • n H$_2$O).

Figure 9(a):   Cyclic Voltammogram (CV) of 0.1M [N(C$_4$H$_5$)$_4$][BF$_4$] (solid line) and 0.01 M [N(C$_4$H$_5$)$_4$]$_2$[B$_{12}$F$_{11}$H] (diagonal cross) in 3:7 EC:DMC on a glassy carbon electrode at 50 mV/s.

Figure 9(b):   Cyclic Voltammogram (CV) of 0.1M [N(C$_4$H$_5$)$_4$][BF$_4$] (solid line) and 0.01 M [N(C$_4$H$_5$)$_4$]$_2$[B$_{12}$F$_{11}$H] (diagonal cross) in 3:7 EC:DMC on a glassy carbon electrode at 50 mV/s.

Figure 10(a):   Plot of capacitance (in Farads/gram AC) versus potential of a quasi-reference Pt electrode for a 0.026M solution of [(CH$_3$)$_4$N]$_2$[B$_{12}$F$_{12}$] in 1:1 EC/DMC.

Figure 10(b):   Plot of capacitance (in Farads/gram AC) versus potential of a quasi-reference Pt electrode for a 0.039M solution of the control electrolyte [N(CH$_3$)$_4$][BF$_4$] in 1:1 EC/DMC. Scan rate 15mV/s.

Figure 11(a):   Plot of capacitance (in Farads/gram AC) versus potential of a quasi-reference Pt electrode for a 0.06M solution of [N(C$_2$H$_5$)$_3$CH$_3$]$_2$[B$_{12}$F$_{11.3}$H$_{0.7}$] in 1:1 EC/DMC. Scan rate 15mV/s.

Figure 11(a):   Plot of capacitance (in Farads/gram AC) versus potential of a quasi-reference Pt electrode for a 0.09M solution of the control electrolyte [N(CH$_3$)$_4$][BF$_4$] in 1:1 EC/DMC. Scan rate 15mV/s.

Figure 12:   Schematic of capacitor test cells constructed to test the electrolyte. Electrodes are 0.002" thick, and the separator 0.001" thick.

Figure 13:  Constant-current voltage cycling of the test and control cells. In both cases the cell was cycled from 1.0 V to upper voltages of 1.5 V, 1.75 V, 2.0 V, 2.25 V, 2.5 V, 2.75 V, and 3.0 V. Three cycles were performed for each upper voltage limit using 2.5 mA for the charge and discharge currents with 5 second periods of open circuit at the maximum and minimum voltage of each cycle. A charge and discharge current of 2.5 mA corresponds to a current density of ~1.25 mA/cm2. The cycling of the control cell extends to longer times because of its greater capacitance, i.e. longer charge and discharge times.

Figure 14:  Successive constant current (2.5mA) cycling of the test electrolyte, 0.2M $[N(C_2H_5)_3CH_3]_2[B_{12}F_{11.3}H_{0.7}]$ in 1:1 PC/DMC and the control electrolyte, 1M $[N(C_2H_5)_4][BF_4]$ in 1:1 PC/DMC with a maximum of 3.0V. Cycling was not continuous between the first and last cycle and the last cycle occurs about two hours after the first cycle. The last three cycles for each cell were continuous. There are distinct changes between the first and subsequent cycles for each cell, particularly during charging. The discharge parts of the curves appear to be similar for each subsequent cycle.

Figure 15:  Charging capacitance of the capacitor cells containing the test electrolyte, and the control electrolyte plotted as a function of voltage, as calculated for the second constant current cycle (to 3.0V at 2.5mA) data as shown of Figure 14.

Figure 16:  Calculated discharge capacitance of the capacitor cells containing the test electrolyte and the control electrolyte plotted as a function of voltage, for the second constant current cycle (to 3.0V at 2.5mA), data as shown in Figure 14.

## Claims

1.  A capacitor comprising an anode, a cathode and an electrolyte comprising at least one solvent and at least one salt, wherein the salt is $[N(CH_3)_4]_2[B_{12}F_nH]$ or comprises $[N(C_2H_5)_3CH_3]_2[B_{12}F_{11.3}H_{0.7}]$.

## Patentansprüche

1.  Kondensator, umfassend eine Anode, eine Kathode und einen Elektrolyten, der mindestens ein Lösungsmittel und mindestens ein Salz umfasst, wobei das Salz $[N(CH_3)_4]_2[B_{12}F_{11}H]$ ist oder $[N(C_2H_5)_3CH_3]_2[B_{12}F_{11,3}H_{0,7}]$ umfasst.

## Revendications

1.  Condensateur comprenant une anode, une cathode et un électrolyte comprenant au moins un solvant et au moins un sel, dans lequel le sel est du $[N(CH_3)_4]_2[B_{12}F_{11}H]$ ou comprend du $[N(C_2H_5)_3CH_3]_2[B_{12}F_{11,3}H_{0,7}]$.

Figure 1

FIG. 2

Figure 3

## TGA

## Figure 4

Figure 5

Figure 6

Figure 7

31

Figure 8

Figure 9(a)

Figure 9(b)

Figure 10(a)

**E / V vs. Pt**

# Figure 10(b)

Figure 11(a)

Figure 11(b)

CURRENT COLLECTOR

\+ ELECTRODE separator

ELECTRODE conductive faceplate

\- CURRENT COLLECTOR

# Figure 12

Figure 13

Figure 14

Figure 15

Figure 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 71076605 P
- US 4201839 A
- US 5849432 A
- US 6346351 B
- US 6159640 A
- US 6537697 B
- US 6514474 B
- US 20030059684 A1
- US 20040137324 A1
- US 6468684 B
- US 5344722 A
- US 6059943 A
- EP 230907 A, T. Morimoto
- US 4730239 A, J. Currie
- EP 908905 A, S. Mita
- US 2005162813 A
- WO 9960587 A, Y. Maletin
- US 6252762 B1
- EP 1624519 A
- US 6335466 B
- EP 1513215 A
- FR 2523770
- US 3551120 A
- US 35511120 B, H. C. Miller, E. C. Muetheries

**Non-patent literature cited in the description**

- *Electrochimica Acta,* 2002, 1013-1022
- **J. O.M. BOCKRIS ; S. U. M. KHAN.** Surface Electrochemistry. Plenum Press, 887
- **ALBERTI et al.** Solid State Protonic Conductors, Present Main Application and Future Prospects. *Solid State Ionics,* 2001, vol. 145, 3-16
- **YANG et al.** Approaches And Technical Challenges To High Temperature Operation Of Proton Exchange Membrane Fuel Cells. *Journal of Power Sources,* 2001, vol. 103, 1-9
- **RUPICH et al.** Characterization of Chloroclosoborane Acids as Electrolytes for Acid Fuel Cells. *J. Electrochem. Soc.,* 1985, vol. 132, 119
- **FOLLOWING B. E. CONWAY et al.** Electrochemical Supercapacitors. Kluwer Academic/Plenum, 1999
- **B. E. CONWAY et al.** The role and utilization of pseudocapacitance for energy storage by supercapacitors. *Journal of Power Sources,* 1997, vol. 66, 1-14
- Polymer Supercapacitors. **M. MASTRAGOSTINO et al.** Advances in Lithium-Ion Batteries. Kluwer Academic, 2002
- CRC Handbook of Chemistry and Physics. 8-21, 8-31
- **E. L. MUETTERTIES ; W. H. KNOTH.** Polyhedral Boranes. Marcel Dekker, Inc, 1968, 1
- Proton Conductors. Cambridge Univ. Press, 1992
- **PEYMANN, T. ; KNOBLER, C. B. ; HAWTHORNE, M. F.** *Inorg. Chem.,* 2000, vol. 39 (11), 63
- **T. PEYMANN et al.** *Inorg. Chem.,* 2000, vol. 39, 1163
- **W. H. KNOTH et al.** *J. Am. Chem. Soc.,* 1964, 3973
- **K. KU et al.** Quaternary Onium Salts as Nonaqueous Electrolytes for Electrochemical Capacitors. *J. of Electrochemical Soc.,* 2001, vol. 148 (3), A267